# EUROPÄISCHE PATENTANMELDUNG

(11) **EP 4 538 095 A1**
(43) Veröffentlichungstag der Anmeldung: **16.04.2025**
(21) Anmeldenummer: 24204363.6
(22) Anmeldetag: 02.10.2024
(51) Int. Cl.: B60L 3/04, B60L 53/10, B60L 53/14, B60L 53/16, B60L 53/22, B60L 53/62, B60L 53/63, H01R 13/447

(54) **LADEVORRICHTUNG FÜR EIN ELEKTROFAHRZEUG**

(30) Priorität: 10.10.2023 DE 102023127633
(71) Anmelder: MAN Truck & Bus SE, 80995 München (DE)
(72) Erfinder: Hessel, Marcel, 80995 München (DE); Hofmann, Bernd, 80995 München (DE); Raub, Jonas, 80995 München (DE)

(57) **Zusammenfassung**

Die Erfindung betrifft eine Ladevorrichtung (10) für ein Elektrofahrzeug (30), aufweisend einen Gleichspannungseingang (12) zum elektrischen Verbinden mit mindestens einer Ladeschnittstelle (22, 24) des Elektrofahrzeugs (30) und einen Gleichspannungsausgang (14) zum Verbinden mit einem elektrischen Energiespeicher (32) des Elektrofahrzeugs (30). Weiterhin weist die Ladevorrichtung (10) eine schaltbare Verbindungseinrichtung (16) auf, über die der Gleichspannungseingang (12) und der Gleichspannungsausgang (14) miteinander elektrisch verbindbar sind und die mehrere Schaltelemente (16a, 16b, 16c, 16d, 16e, 16f, 16g, 16h) aufweist. Ferner weist die Ladevorrichtung (10) eine Steuereinrichtung (18) zur Betreiben der mehreren Schaltelemente (16a, 16b, 16c, 16d, 16e, 16f, 16g, 16h) auf. Die Steuereinrichtung (18) ist hierbei eingerichtet ist, für ein Laden des elektrischen Energiespeichers (32) mittels eines ersten Ladeverfahrens, die mehreren Schaltelemente (16a, 16b, 16c, 16d, 16e, 16f) in einer ersten Schaltstellung (S₁) zu betreiben und für ein Laden des elektrischen Energiespeichers (32) mittels eines zweiten Ladeverfahrens, die mehreren Schaltelemente (16a, 16b, 16c, 16d, 16e, 16f) in einer zweiten Schaltstellung (S₂) zu betreiben.

## Beschreibung

Die Erfindung betrifft eine Ladevorrichtung für ein Elektrofahrzeug, ein Verfahren zur Herstellung eines Ladesystems mit einer ebensolchen Ladevorrichtung, ein entsprechendes Ladesystem sowie ein Kraftfahrzeug mit einem solchen Ladesystem.

Im Stand der Technik sind Fahrzeuge, die mittels eines Elektromotors zumindest teilweise elektrisch eintreibbar sind, grundsätzlich bekannt. Die hierfür notwendige elektrische Energie wird in der Regel von einer Traktionsbatterie des Fahrzeugs bereitgestellt, welche in regelmäßigen Abständen über eine fahrzeugexterne Ladestation aufzuladen ist. Hierzu wird meist über ein Ladekabel eine elektrische Ladeverbindung zwischen dem Fahrzeug und der Ladestation hergestellt, wobei üblicherweise ein am Ladekabel angebrachter Ladestecker in eine korrespondierende Ladebuchse am Kraftfahrzeug eingesteckt wird.

In diesem Zusammenhang sind im Stand der Technik verschiedene Ladeverfahren mit jeweils standardisierten Stecker-Buchse-Systemen bekannt.

Das Combined Charging System (CCS) ist in der IEC 62196 genormt und basiert in Europa (CCS2) auf dem Typ2-Stecker, der in der EN 62196-2 festgelegt ist. Der Typ 2 Stecker weist neben drei Phasen- bzw. Stromkontakten zudem einen Erdungskontakt (PE), einen Neutralleiterkontakt (N) und zwei Signalübertragungspins (CP und PP) zur Übermittlung von pulsweitenmodulierten Signalen auf. Im CCS wird der vorgenannte Typ 2 Stecker um zwei Kontakte (DC+ und DC-) zum Laden von Gleichstrom erweitert, wobei beim CCS-Gleichstromladen der IEC-62196-Lademodus 4 zur Anwendung kommt. Neben den zwei Gleichstromkontakten werden dabei lediglich die beiden Signalübertragungspins (CP und PP) und der Erdungskontakt (PE) der eigentlich sieben Kontakte des Typ 2 Steckerabschnitts genutzt.

Das Combined Charging System (CCS) für den amerikanischen Markt (CCS1) ist grundsätzlich ähnlich aufgebaut, allerdings basiert es nicht auf dem Typ 2, sondern auf dem Typ 1 Stecker, der in der SAE J1772 festgelegt ist. Der Typ 1 Stecker ähnelt durch die beiden Kommunikationspins grundsätzlich dem Typ 2 Stecker, ist jedoch auf einphasiges Laden ausgerichtet. Im CCS1 wird der Typ 1 Stecker um zwei Kontakte (DC+ und DC-) zum Laden von Gleichstrom erweitert, wobei beim CCS-Gleichstromladen - neben den zwei Gleichstromkontakten - wiederum nur die beiden Signalübertragungspins (CP und PP) und der Erdungskontakt (PE) der eigentlich fünf Kontakte des Typ 1 Abschnitts genutzt werden. Das Kommunikationsprotokoll ist identisch mit dem europäischen CCS2 System.

Im amerikanischen Markt ist ferner der in der SAE J3400 genormte North American Charging Standard (NACS) bekannt. Ursprünglich wurde dieser als proprietäre Ladestecker von Tesla-Fahrzeugen in Nordamerika verwendet. Das NACS System ist für eine Stromstärke bis 900 Ampere und 1000 Volt Gleichspannung ausgelegt. Theoretisch sind so 900 kW Ladeleistung möglich, wobei bisher in der Regel maximal 500 Ampere bei maximal 500 Volt realisiert werden. Der Stecker weist zwei Stromkontakte auf, die sowohl zum Gleichstromladen als auch zum einphasigem Wechselstromladen verwendet werden können. Daneben sind ein Erdungskontakt (PE) und zwei Signalübertragungspins (CP und PP) vorhanden.

Das Megawatt Charging System (MCS) ist ein Schnellladesystem, hauptsächlich für Lastkraftwagen. MCS basiert technisch auf dem CCS erlaubt jedoch eine maximale Ladespannung von 1250 Volt Gleichspannung und einen maximalen Ladestrom von 3000 Ampere. Die infrastrukturseitigen Systemanforderungen sind hierbei in der IEC 61851-23-3 festgelegt. Hinsichtlich der Steckverbindung kann auf die IEC TS 63379 und hinsichtlich der Systemanforderungen auf Fahrzeugseite auf die ISO 5474-3 verwiesen werden. Der Stecker weist zwei Gleichstromkontakte (DC+ und DC-), einen Erdungskontakt (PE), zwei CCS-kompatible Signalübertragungspins (CP und PP) sowie zwei weitere Kommunikationskontakte auf.

Problematisch an der Mehrzahl von Ladeverfahren bzw. Ladestandards ist, dass die Fahrzeuge in der Regel nur für ein Ladeverfahren ausgebildet sind und entsprechend nicht alle verfügbaren Ladestationen nutzen können. Ferner wird die Herstellung der Fahrzeuge erschwert, da für die jeweiligen Ladeverfahren jeweils eigene Komponenten, wie Schützboxen etc., verwendet werden müssen.

Aufgabe der Erfindung ist es, eine verbesserte Lösung zum Laden eines Kraftfahrzeugs bereitzustellen, mittels derer vorzugsweise die Nachteile der bisherigen Lösungen vermieden werden können. Bevorzugt ist es eine Aufgabe der Erfindung, eine Lösung bereitzustellen, mittels derer auf einfache Weise verschiedene Ladeverfahren bzw. Ladestandards genutzt werden können.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem ersten unabhängigen Aspekt der vorliegenden Offenbarung wird eine Ladevorrichtung für ein Elektrofahrzeug, vorzugsweise ein Elektro-Nutzfahrzeug, bereitgestellt. Die Ladevorrichtung dient dabei bevorzugt zum Einbau in das Elektrofahrzeug, z. B. zum Einbau in einen Hochvoltladepfad des Elektrofahrzeugs.

Die Ladevorrichtung weist einen Gleichspannungseingang (z. B. mit mehreren DC-Eingangskontakten) zum elektrischen Verbinden mit mindestens einer Ladeschnittstelle (z. B. Ladebuchse) des Elektrofahrzeugs auf. Bevorzugt ist die mindestens eine Ladeschnittstelle des Elektrofahrzeugs dabei zum Empfangen von elektrischer Energie (z. B. eines DC-Ladestroms) von einer (z. B. fahrzeugexternen) Ladestation eingerichtet. Beispielsweise kann die mindestens eine Ladeschnittstelle für ein Anschließen eines Ladekabels bzw. zum Einstecken eines Ladesteckers ausgebildet sein.

Ferner weist die Ladevorrichtung einen Gleichspannungsausgang (z. B. mit mehreren DC-Ausgangskontakten) zum Verbinden mit einem elektrischen Energiespeicher (z. B. einer Traktionsbatterie) des Elektrofahrzeugs auf. Beispielsweise kann der elektrische Energiespeicher hierbei als ein Hochvolt-Energiespeicher ausgebildet sein, vorzugsweise mit einer Batteriespannung zwischen 60 V und 1,5 kV, besonders bevorzugt zwischen 400 V und 850 V.

Weiterhin weist die Ladevorrichtung eine schaltbare Verbindungseinrichtung auf, über die der Gleichspannungseingang und der Gleichspannungsausgang miteinander elektrisch verbindbar und/oder verbunden sind. Die Verbindungseinrichtung weist dabei mehrere (z. B. gleich ausgebildete) Schaltelemente (z. B. Schaltschütze, insbesondere Hochvolt-Schaltschütze) auf. Die Schaltelemente dienen bevorzugt dazu, einen Fluss und/oder Pfad der elektrischen Energie vom Gleichspannungseingang zum Gleichspannungsausgang in der Verbindungseinrichtung zu variieren. Besonders bevorzugt umfassen die mehrere Schaltelemente der Verbindungseinrichtung dabei ausschließlich vier oder sechs Schaltelemente.

Ferner weist die Ladevorrichtung eine Steuereinrichtung zum Betreiben (z. B. Ansteuern) der mehreren Schaltelemente auf. Die Ladevorrichtung und die mehreren Schaltelemente können dazu über entsprechende Signalleitungen miteinander verbunden sein.

Weiterhin ist vorgesehen, dass die Steuereinrichtung eingerichtet ist, für ein Laden des elektrischen Energiespeichers mittels eines ersten Ladeverfahrens (z. B. eines MCS-Ladeverfahrens) die mehreren Schaltelemente in einer ersten Schaltstellung zu betreiben (z. B. in eine erste Schaltstellung zu schalten) und für ein Laden des elektrischen Energiespeichers mittels eines (z. B. vom ersten Ladeverfahren unterschiedlichen) zweiten Ladeverfahrens (z. B. eines CCS-Ladeverfahrens oder eines NACS-Ladeverfahrens) die mehreren Schaltelemente in einer zweiten Schaltstellung zu betreiben (z. B. in eine zweite Schaltstellung zu schalten). Bevorzugt unterscheiden sich die erste und zweite Schaltstellung in der Stellung zumindest eines der mehreren Schaltelemente.

Auf vorteilhafte Weise kann dadurch, wie im Folgenden noch eingehender beschrieben wird, je nachdem, mit welcher Ladeschnittstelle das Elektrofahrzeug ausgestattet ist bzw. welche Ladestation gerade angefahren wird, das jeweils passende Ladeverfahren durchgeführt werden. Beispielsweise kann im Fall, dass das Elektrofahrzeug über mehrere Ladeschnittstellen bzw. Ladebuchsen verfügt, je nachdem, welche der Ladeschnittstellen gerade an eine Ladestation angeschlossen ist, die für die jeweilige Ladeschnittstelle bzw. das zugehörige Ladeverfahren die entsprechende Ladearchitektur mit entsprechender Kurzschlussgrenze, Leistungsauslegung, etc. bereitstellen. Insgesamt wird damit auf vorteilhafte Weise eine intelligente Hochvoltarchitektur mit mehreren Leistungsstufen ermöglicht, wobei die Anpassbarkeit der Ladevorrichtung eine Nutzung als Gleichteil in verschiedenen Fahrzeugausführungen mit verschiedenen Ladeschnittstellen im Sinne eines Baukastensystems ermöglicht, wodurch Herstellungskosten und Montageaufwand reduziert werden können.

Gemäß einem ersten Aspekt kann die mindestens einer Ladeschnittstelle des Elektrofahrzeugs eine MCS-Ladeschnittstelle und/oder eine CCS-Ladeschnittstelle und/oder NACS-Ladeschnittstelle aufweisen. Bevorzugt weist die mindestens einer Ladeschnittstelle dabei sowohl eine MCS-Ladeschnittstelle als auch eine CCS- oder NACS-Ladeschnittstelle auf. Hinsichtlich der jeweiligen Spezifikationen der verschiedenen Ladeschnittstellen sei auf die Ausführungen im einleitenden Teil hierin verwiesen. Durch das Vorsehen gerade dieser Ladeschnittstellen kann insbesondere für Elektro-Nutzfahrzeuge eine möglichst vorteilhafte Nutzung vorhandener Ladeinfrastruktur ermöglicht werden.

Nach einem weiteren Aspekt kann die Ladevorrichtung in der ersten Schaltstellung eine erste Kurzschlussgrenze aufweisen und in der zweiten Schaltstellung eine, von der erste Kurzschlussgrenze unterschiedliche (z. B. höhere), zweite Kurzschlussgrenze aufweisen.

Zudem oder alternativ kann die Ladevorrichtung in der ersten Schaltstellung für eine erste maximale Ladespannung (z. B. von bis zu 1000 Volt) eingerichtet sein und in der zweiten Schaltstellung für eine, von der ersten maximalen Ladespannung unterschiedlichen (z. B. höheren) zweiten maximalen Ladespannung (z. B. von über 1000 Volt und/oder von bis zu 1250 Volt) eingerichtet sein. Bevorzugt sind die erste und zweite maximale Ladespannung jeweils maximale DC-Ladespannungen.

Zudem oder alternativ kann die Ladevorrichtung in der ersten Schaltstellung für einen ersten maximalen Ladestrom (z. B. von unter 1000 Ampere) eingerichtet sein und in der zweiten Schaltstellung für einen, von dem ersten maximalen Ladestrom unterschiedlichen (z. B. höheren) zweiten maximalen Ladestrom (z. B. von über 1000 Ampere und/oder von bis zu 3000 Ampere) eingerichtet sein. Bevorzugt sind der erste und zweite maximale Ladestrom jeweils maximale DC-Ladeströme. All diese Varianten ermöglichen auf vorteilhafte Weise unterschiedliche Bedingungen für verschiedene Ladeverfahren bereitzustellen, wodurch ein möglichst flexibler Einsatz der Ladevorrichtung sichergestellt wird.

Gemäß einem weiteren Aspekt kann die Verbindungseinrichtung einen (z. B. schaltbaren) positiven Ladestrompfad, vorzugsweise ausschließlich einen positiven Ladestrompfad, aufweisen. Dieser kann sich ausgehend vom Gleichspannungseingang an einer positiven Verzweigungsstelle in einen ersten positiven Ladestromteilpfad und einen (z. B. zum ersten positiven Ladestromteilpfad parallelen) zweiten positiven Ladestromteilpfad verzweigen. Bevorzugt ist über den positiven Ladestrompfad (z. B. wahlweise) ein DC-Eingangskontakt des Gleichspannungseingangs mit einem oder zwei DC-Ausgangskontakten des Gleichspannungsausgangs verbindbar oder verbunden. Wie im Folgenden noch eingehender beschrieben wird, ermöglicht dies im Zusammenspiel mit den Schaltelementen ein bedarfsgerechtes Aufteilen des DC-Ladestroms, bspw. um dadurch zeitweise eine höhere Strombelastbarkeit zu realisieren.

Nach einem weiteren Aspekt können die mehreren Schaltelemente ein Schaltelement (z. B. einen Schaltschütz, insbesondere Hochvolt-Schaltschütz) aufweisen, das im ersten positiven Ladestromteilpfad angeordnet ist. Zur besseren Unterscheidung kann dieses Schaltelement im Folgenden auch als erstes positives Schaltelement bezeichnet werden.

Zudem oder alternativ können die mehreren Schaltelemente auch ein Schaltelement (z. B. einen Schaltschütz, insbesondere Hochvolt-Schaltschütz) aufweisen, das im zweiten positiven Ladestromteilpfad angeordnet ist. Zur besseren Unterscheidung kann dieses Schaltelement im Folgenden auch als zweites positives Schaltelement bezeichnet werden.

Gemäß einem weiteren Aspekt kann in der ersten Schaltstellung das erste positive Schaltelement und das zweite positive Schaltelement gleich, vorzugsweise geschlossen, geschaltet sein. Entsprechend kann in der ersten Schaltstellung im positiven Ladestrompfad bevorzugt ein Aufteilen des DC-Ladestroms in den ersten und zweiten Ladestromteilpfad erfolgen. Auf vorteilhafte Weise kann dadurch ein Durchleiten hoher Stromstärken, wie sie bspw. beim MCS-Laden auftreten, und das Einhalten der entsprechenden MCS-Kurzschlussgrenzen ermöglicht werden.

Zudem oder alternativ kann in der zweiten Schaltstellung das erste positive Schaltelement und das zweite positive Schaltelement unterschiedlich geschaltet sein. Beispielsweise derart, dass das erste positive Schaltelement geschlossen und das zweite positive Schaltelement geöffnet ist, oder umgekehrt. Entsprechend kann in der zweiten Schaltstellung im positiven Ladestrompfad bevorzugt kein Aufteilen des DC-Ladestroms erfolgen bzw. der gesamte DC-Ladestrom über den ersten oder zweiten positiven Ladestromteilpfad fließen. Auf vorteilhafte Weise kann dadurch für eher niedrigere Stromstärken, wie sie bspw. beim CCS-Laden auftreten, ein möglichst einfaches Durchleiten des DC-Ladestroms und das Einhalten der entsprechenden CCS-Kurzschlussgrenzen ermöglicht werden.

Nach einem weiteren Aspekt kann die Verbindungseinrichtung einen (z. B. schaltbaren) negativen Ladestrompfad, vorzugsweise ausschließlich einen negativen Ladestrompfad, aufweisen. Dieser kann sich ausgehend vom Gleichspannungseingang an einer negativen Verzweigungsstelle in einen ersten negativen Ladestromteilpfad und einen (z. B. zum ersten positiven Ladestromteilpfad parallelen) zweiten negativen Ladestromteilpfad verzweigen. Bevorzugt ist über den negativen Ladestrompfad (z. B. wahlweise) ein DC-Eingangskontakt des Gleichspannungseingangs mit einem oder zwei DC-Ausgangskontakten des Gleichspannungsausgangs verbindbar oder verbunden. Wie im Fall des positiven Ladestrompfads ermöglicht auch der negative Ladestrompfad ein bedarfsgerechtes Aufteilen des DC-Ladestroms, bspw. um dadurch zeitweise eine höhere Strombelastbarkeit zu realisieren.

Gemäß einem weiteren Aspekt können die mehreren Schaltelemente ein Schaltelement (z. B. einen Schaltschütz, insbesondere Hochvolt-Schaltschütz) aufweisen, das im ersten negativen Ladestromteilpfad angeordnet ist. Zur besseren Unterscheidung kann dieses Schaltelement im Folgenden auch als erstes negatives Schaltelement bezeichnet werden.

Zudem oder alternativ können die mehreren Schaltelemente auch ein Schaltelement (z. B. einen Schaltschütz, insbesondere Hochvolt-Schaltschütz) aufweisen, das im zweiten negativen Ladestromteilpfad angeordnet ist. Zur besseren Unterscheidung kann dieses Schaltelement im Folgenden auch als zweites negatives Schaltelement bezeichnet werden.

Nach einem weiteren Aspekt kann in der ersten Schaltstellung das erste negative Schaltelement und das zweite negative Schaltelement gleich, vorzugsweise geschlossen, geschaltet sein. Entsprechend kann in der ersten Schaltstellung im negative Ladestrompfad bevorzugt ein Aufteilen des DC-Ladestroms in den ersten und zweiten negativen Ladestromteilpfad erfolgen. Auf vorteilhafte Weise kann dadurch ein Durchleiten hoher Stromstärken, wie sie bspw. beim MCS-Laden auftreten, und das Einhalten der entsprechenden MCS-Kurzschlussgrenzen ermöglicht werden.

Zudem oder alternativ kann in der zweiten Schaltstellung das erste negative Schaltelement und das zweite negative Schaltelement unterschiedlich geschaltet sein. Beispielsweise derart, dass das erste negative Schaltelement geschlossen und das zweite negative Schaltelement geöffnet ist, oder umgekehrt. Entsprechend kann in der zweiten Schaltstellung im negativen Ladestrompfad bevorzugt kein Aufteilen des DC-Ladestroms erfolgen bzw. der gesamte Ladestrom über den ersten oder zweiten negativen Ladestromteilpfad fließen. Auf vorteilhafte Weise kann dadurch für eher niedrigere Stromstärken, wie sie bspw. beim CCS-Laden auftreten, ein möglichst einfaches Durchleiten des DC-Ladestroms und das Einhalten der entsprechenden CCS-Kurzschlussgrenzen ermöglicht werden.

Gemäß einem weiteren Aspekt kann die Verbindungseinrichtung zumindest zwei Sicherungen (z. B. Schmelzsicherungen) aufweisen. In einer Ausführungsform kann eine Sicherung der zumindest zwei Sicherungen im ersten positiven Ladestromteilpfad angeordnet sein und eine weitere Sicherung der zumindest zwei Sicherungen kann im zweiten positiven Ladestromteilpfad angeordnet sein, bspw. parallel zur Sicherung im ersten positive Ladestromteilpfad.

Zudem oder alternativ kann auch eine Sicherung der zumindest zwei Sicherungen im ersten negativen Ladestromteilpfad angeordnet sein und eine weitere Sicherung der zumindest zwei Sicherungen kann im zweiten negativen Ladestromteilpfad angeordnet sein, bspw. parallel zur Sicherung im ersten negativen Ladestromteilpfad. Auf vorteilhafte Weise können dadurch die jeweiligen Kurzschlussgrenzen für das erste und zweite Ladeverfahren eingestellt werden.

Nach einem weiteren Aspekt können die mehreren Schaltelemente der Verbindungseinrichtung ein Haupt-Schaltelement (z. B. ein Hauptschaltschütz) umfassen, das im positiven Ladestrompfad (z. B. zwischen dem Gleichspannungseingang und der positiven Verzweigungsstelle) angeordnet sein kann. Zur besseren Unterscheidung kann dieses Haupt-Schaltelement im Folgenden auch als positives Haupt-Schaltelement bezeichnet werden. Im Fall, dass die Verbindungseinrichtung das positive Haupt-Schaltelement aufweist, kann bevorzugt nur einer der beiden positiven Ladestromteilpfade, d. h. nur der erste oder zweite positive Ladestromteilpfad, ein (z. B. weiteres) Schaltelement aufweisen. Beispielsweise können die mehreren Schaltelemente - neben dem positiven Haupt-Schaltelement - ein (z. B. als positives Schaltelement bezeichenbares) Schaltelement aufweisen, das im ersten positiven Ladestromteilpfad angeordnet ist, während der zweite positive Ladestromteilpfad bevorzugt kein Schaltelement aufweist. Alternativ dazu können die mehreren Schaltelemente ein positives Schaltelement aufweisen, das im zweiten positiven Ladestromteilpfad angeordnet ist, während der erste positive Ladestromteilpfad sodann bevorzugt kein Schaltelement aufweist. Bevorzugt sind das positive Haupt-Schaltelement und das positive Schaltelement in Reihe geschalten. In einer Ausführungsform kann das positive Haupt-Schaltelement dabei größer dimensioniert sein als das positive Schaltelement und/oder eine geringere Ausfallwahrscheinlichkeit als das positive Schaltelement aufweisen. Je nach Anwendungsfall kann sich diese Auslegung der Schaltelemente als vorteilhafter als eine symmetrische Anordnung der Schaltelemente erweisen.

Zudem oder alternativ können die mehreren Schaltelemente der Verbindungseinrichtung ein Haupt-Schaltelement (z. B. ein Hauptschaltschütz) umfassen, das im negativen Ladestrompfad (z. B. zwischen dem Gleichspannungseingang und der negativen Verzweigungsstelle) angeordnet sein kann. Zur besseren Unterscheidung kann dieses Haupt-Schaltelement im Folgenden auch als negatives Haupt-Schaltelement bezeichnet werden. Im Fall, dass die Verbindungseinrichtung das negative Haupt-Schaltelement aufweist, kann bevorzugt nur einer der beiden negativen Ladestromteilpfade, d. h. nur der erste oder zweite negative Ladestromteilpfad, ein (z. B. weiteres) Schaltelement aufweisen. Beispielsweise können die mehreren Schaltelemente - neben dem negativen Haupt-Schaltelement - ein (z. B. als negatives Schaltelement bezeichenbares) Schaltelement aufweisen, das im ersten negativen Ladestromteilpfad angeordnet ist, während der zweite negative Ladestromteilpfad bevorzugt kein Schaltelement aufweist. Alternativ dazu können die mehreren Schaltelemente ein negatives Schaltelement aufweisen, das im zweiten negativen Ladestromteilpfad angeordnet ist, während der erste negative Ladestromteilpfad bevorzugt kein Schaltelement aufweist. Bevorzugt sind das negative Haupt-Schaltelement und das negative Schaltelement in Reihe geschalten. In einer Ausführungsform kann das negative Haupt-Schaltelement größer dimensioniert sein als das negative Schaltelement und/oder eine geringere Ausfallwahrscheinlichkeit als das negative Schaltelement aufweisen. Je nach Anwendungsfall kann sich diese Auslegung der Schaltelemente wiederum als vorteilhafter als eine symmetrische Anordnung der Schaltelemente erweisen.

Gemäß einem weiteren Aspekt weist die Ladevorrichtung ferner einen Wechselspannungseingang (z. B. mit mehreren AC-Eingangskontakten) zum elektrischen Verbinden mit der mindestens einen Ladeschnittstelle (z. B. mit einem oder mehreren AC-Stromkontakten der mindestens einen Ladeschnittstelle) des Elektrofahrzeugs aufweisen. Bevorzugt ist der Wechselspannungseingang dabei separat bzw. (z. B. räumlich) getrennt zum Gleichspannungseingang ausgebildet. Weiterhin kann die Ladevorrichtung einen Wechselspannungsausgang (z. B. mit mehreren AC-Ausgangskontakten) zum Verbinden mit einem AC-DC-Wandler (z. B. On-Board-Charger) des Elektrofahrzeugs aufweisen. Bevorzugt ist dabei auch der Wechselspannungsausgang separat bzw. (z. B. räumlich) getrennt zum Wechselspannungseingang ausgebildet. Ferner kann die Ladevorrichtung eine (z. B. schaltbare) weitere Verbindungseinrichtung aufweisen, über die der Wechselspannungseingang und der Wechselspannungsausgang miteinander elektrisch verbindbar sind. Zur besseren Unterscheidung kann die weitere Verbindungseinrichtung hierbei auch als AC-Verbindungseinrichtung und die vorgenannte Verbindungseinrichtung auch als DC-Verbindungseinrichtung bezeichnet werden. Weiterhin ist es ist möglich, dass auch die weitere Verbindungseinrichtung bzw. AC-Verbindungseinrichtung eines oder mehrere weitere Schaltelemente aufweist, bspw. um einen Stromfluss vom Wechselspannungseingang zum Wechselspannungsausgang zeitweise zu unterbinden. Auf vorteilhafte Weise kann dadurch neben einem DC-Laden zusätzlich auch ein AC-Laden über dieselbe Ladevorrichtung ermöglicht werden.

Nach einem weiteren Aspekt kann die Steuereinrichtung ferner eingerichtet sein, für ein Laden des elektrischen Energiespeichers mittels eines Wechselstrom-Ladeverfahrens die mehreren Schaltelemente der Verbindungseinrichtung bzw. DC-Verbindungseinrichtung in eine dritte Schaltstellung zu schalten. Bevorzugt sind in der dritten Schaltstellung alle der mehreren Schaltelemente der DC-Verbindungseinrichtung geöffnet. Entsprechend soll in der dritten Schaltstellung bevorzugt kein Stromfluss zwischen dem Gleichspannungseingang und dem Gleichspannungsausgang möglich sein. Auf vorteilhafte Weise können dadurch die AC-Komponenten gegen mögliche Einflüsse der DC-Komponenten abgesichert werden.

Gemäß einem weiteren Aspekt können die weitere Verbindungseinrichtung bzw. AC-Verbindungseinrichtung und die Verbindungseinrichtung bzw. DC-Verbindungseinrichtung voneinander elektrisch und/oder galvanisch getrennt sein. Beispielsweise kann die weitere bzw. AC-Verbindungseinrichtung ausgebildet sein, einen AC-Ladestrom vom Wechselspannungseingang zum Wechselspannungsausgang durchzuschleifen, vorzugsweise ohne, dass dieser in Kontakt mit der DC-Verbindungseinrichtung kommt.

Alternativ können die weitere Verbindungseinrichtung bzw. AC-Verbindungseinrichtung und die Verbindungseinrichtung bzw. DC-Verbindungseinrichtung (z. B. innerhalb der Ladevorrichtung) miteinander elektrisch verbunden sein. Beispielsweise können die AC- und DC-Verbindungseinrichtung einen oder mehrere gemeinsame Leitungsabschnitte aufweisen. Entsprechend kann der DC-Ladestrom beim Durchgang vom Gleichspannungseingang zum Gleichspannungsausgang bspw. auch teilweise über die AC-Verbindungseinrichtung fließen und/oder der AC-Ladestrom beim Durchgang vom Wechselspannungseingang zum Wechselspannungsausgang bspw. auch teilweise über die DC-Verbindungseinrichtung fließen. In einer bevorzugten Ausführungsform sind dabei der Wechselspannungseingang und der Gleichspannungseingang als ein gemeinsamer Eingang (z. B. mit mehreren Eingangskontakten) ausgebildet. Insbesondere im Zusammenhang mit der Verwendung einer NACS-Ladeschnittstelle kann ermöglicht dies auf vorteilhafte Weise eine effiziente Doppelnutzung der vorhandenen Strukturen.

Nach einem weiteren Aspekt kann die Ladevorrichtung einen weiteren Gleichspannungseingang zum elektrischen Verbinden mit der mindestens einen Ladeschnittstelle des Elektrofahrzeugs aufweisen. Dieser kann zur besseren Unterscheidung im Folgenden auch als zweiter Gleichspannungseingang bezeichnet werden, während der vorgenannte Gleichspannungseingang als erster Gleichspannungseingang bezeichnet werden kann. Bevorzugt ist der weitere bzw. zweite Gleichspannungseingang separat und/oder (z. B. räumlich) getrennt von dem vorgenannten bzw. ersten Gleichspannungseingang ausgebildet. Beispielsweise können der erste und zweite Gleichspannungseingang an verschiedenen Stellen der Ladevorrichtung angeordnet sein. In einer Ausführungsform kann bspw. der erste Gleichspannungseingang zum elektrischen Verbinden mit einer ersten Ladeschnittstelle der mindestens einen Ladeschnittstelle und der zweite Gleichspannungseingang zum elektrischen Verbinden mit einer (z. B. von der ersten Ladeschnittstelle verschiedenen) zweiten Ladeschnittstelle der mindestens einen Ladeschnittstelle ausgebildet sein. Hierbei kann die Verbindungseinrichtung ferner auch den weiteren bzw. zweiten Gleichspannungseingang und den Gleichspannungsausgang miteinander elektrisch verbinden. Beispielsweise kann die Verbindungseinrichtung ausgebildet sein, sowohl einen ersten DC-Ladestrom vom ersten Gleichspannungseingang zum Gleichspannungsausgang, als auch einen zweiten DC-Ladestrom vom zweiten Gleichspannungseingang zum Gleichspannungsausgang zu leiten.

Gemäß einem weiteren Aspekt können in der ersten Schaltstellung (z. B. ausschließlich) der erste Gleichspannungseingang und der Gleichspannungsausgang miteinander elektrisch verbunden sein. Beispielsweise kann in der ersten Schaltstellung der erste DC-Ladestrom von der mit dem ersten Gleichspannungseingang elektrisch verbundenen ersten Ladeschnittstelle zum Gleichspannungsausgang übertragbar sein. Bevorzugt ist dabei der zweite Gleichspannungseingang vom Gleichspannungsausgang getrennt.

Zudem oder alternativ können in der zweiten Schaltstellung (z. B. ausschließlich) der weitere bzw. zweite Gleichspannungseingang und der Gleichspannungsausgang miteinander elektrisch verbunden sein. Beispielsweise kann in der zweiten Schaltstellung der zweite DC-Ladestrom von der mit dem zweiten Gleichspannungseingang elektrisch verbundenen zweiten Ladeschnittstelle zum Gleichspannungsausgang übertragbar sein. Bevorzugt ist dabei der erste Gleichspannungseingang vom Gleichspannungsausgang getrennt.

In einer Ausführungsform kann die Verbindungseinrichtung einen (z. B. schaltbaren) weiteren positiven Ladestrompfad aufweisen. Dieser kann zur besseren Unterscheidung auch als zweiter positiver Ladestrompfad bezeichnet werden, während der vorgenannte positive Ladestrompfad als erster positiver Ladestrompfad bezeichnet werden kann. Über den weiteren positiven Ladestrompfad kann der zweite Gleichspannungseingang mit dem ersten positiven Ladestrompfad (z. B. mit dem ersten oder zweiten positiven Ladestromteilpfad) elektrisch verbindbar sein. Bevorzugt ist der weitere positive Ladestrompfad dabei an einer Stelle zwischen dem ersten positiven Schaltelement und dem Gleichspannungsausgang, vorzugsweise an einer Stelle zwischen dem ersten positiven Schaltelement und der Sicherung, im ersten positiven Ladestromteilpfad mit dem ersten positiven Ladestrompfad elektrisch verbindbar. Alternativ kann der weitere positive Ladestrompfad an einer Stelle zwischen dem zweiten positiven Schaltelement und dem Gleichspannungsausgang, vorzugsweise an einer Stelle zwischen dem zweiten positiven Schaltelement und der weiteren Sicherung im zweiten positiven Ladestromteilpfad mit dem zweiten positiven Ladestrompfad elektrisch verbindbar sein. Ferner können die mehreren Schaltelemente der Verbindungseinrichtung ein weiteres positives Schaltelement umfassen, das im weiteren positiven Ladestrompfad angeordnet ist.

Zudem oder alternativ kann die Verbindungseinrichtung einen weiteren (z. B. schaltbaren) negativen Ladestrompfad aufweisen. Dieser kann zur besseren Unterscheidung auch als zweiter negativer Ladestrompfad bezeichnet werden, während der vorgenannte negative Ladestrompfad als erster negativer Ladestrompfad bezeichnet werden kann. Über den weiteren negativen Ladestrompfad kann der zweite Gleichspannungseingang mit dem ersten negativen Ladestrompfad (z. B. mit dem ersten oder zweiten negativen Ladestromteilpfad) elektrisch verbindbar sein. Bevorzugt ist der weitere negative Ladestrompfad dabei an einer Stelle zwischen dem ersten negativen Schaltelement und dem Gleichspannungsausgang, vorzugsweise an einer Stelle zwischen dem ersten negativen Schaltelement und der Sicherung, im ersten negativen Ladestromteilpfad mit dem ersten negativen Ladestrompfad elektrisch verbindbar. Alternativ kann der weitere negative Ladestrompfad an einer Stelle zwischen dem zweiten negativen Schaltelement und dem Gleichspannungsausgang, vorzugsweise an einer Stelle zwischen dem zweiten negativen Schaltelement und der weiteren Sicherung im zweiten negativen Ladestromteilpfad mit dem zweiten negativen Ladestrompfad elektrisch verbindbar sein. Ferner können die mehreren Schaltelemente der Verbindungseinrichtung ein weiteres negatives Schaltelement umfassen, das im weiteren negativen Ladestrompfad angeordnet ist.

Nach einem weiteren Aspekt kann in der ersten Schaltstellung das erste positive Schaltelement, das zweite positive Schaltelement, das erste negative Schaltelement und das zweite negative Schaltelement gleich, vorzugsweise geschlossen, geschaltet sein. Zudem oder alternativ können in der ersten Schaltstellung das weitere positive Schaltelement und das weitere negative Schaltelement gleich, vorzugsweise geöffnet, geschaltet sein. Entsprechend kann in der ersten Schaltstellung der erste DC-Ladestrom vom ersten Gleichspannungseingang zum Gleichspannungsausgang übertragbar sein, während der zweite Gleichspannungseingang vom Gleichspannungsausgang abgetrennt ist.

Zudem oder alternativ kann in der zweiten Schaltstellung das erste positive Schaltelement, das zweite positive Schaltelement, das erste negative Schaltelement und das zweite negative Schaltelement gleich, vorzugsweise geöffnet, geschaltet sein. Zudem oder alternativ können in der ersten Schaltstellung das weitere positive Schaltelement und das weitere negative Schaltelement gleich, vorzugsweise geschlossen, geschaltet sein. Entsprechend kann in der zweiten Schaltstellung der zweite DC-Ladestrom vom zweiten Gleichspannungseingang zum Gleichspannungsausgang übertragbar sein, während der erste Gleichspannungseingang vom Gleichspannungsausgang abgetrennt ist. Insgesamt kann dadurch auf vorteilhafte Weise für an den ersten und zweiten Gleichspannungseingang angeschlossene unterschiedliche Ladeschnittstellen jeweils eine passende Ladearchitektur bereitgestellt werden.

Gemäß einem weiteren Aspekt kann der erste positive Ladestromteilpfad ausschließlich ein Schaltelement aufweisen. Zudem oder alternativ kann auch der zweite positive Ladestromteilpfad ausschließlich ein Schaltelement aufweisen. Zudem oder alternativ kann der erste negative Ladestromteilpfad ausschließlich ein Schaltelement aufweisen. Zudem oder alternativ kann der zweite negative Ladestromteilpfad ausschließlich ein Schaltelement aufweisen.

Ein weiterer unabhängiger Aspekt der vorliegenden Offenbarung betrifft ein Verfahren zur Herstellung eines Ladesystems für ein Elektrofahrzeug (z. B. für ein Elektro-Nutzfahrzeug). Das Verfahren weist hierbei ein Bereitstellen einer Ladevorrichtung, wie hierin beschrieben, auf. Folglich sollen die hierin in Zusammenhang mit der Ladevorrichtung beschriebenen Aspekte auch im Zusammenhang mit dem Verfahren offenbart und beanspruchbar sein. Entsprechendes soll auch umgekehrt gelten.

Das Verfahren weist ferner ein Bereitstellen mindestens einer Ladeschnittstelle zum Empfangen von elektrischer Energie von einer fahrzeugexternen Ladestation auf. Bevorzugt weist die mindestens eine Ladeschnittstelle mindestens zwei (z. B. unterschiedliche) Ladeschnittstellen auf. Beispielsweise kann die mindestens einer Ladeschnittstelle eine MCS-Ladeschnittstelle (z. B. eine MCS-Ladebuchse) und eine CCS-Ladeschnittstelle (z. B. eine CCS1- oder CCS2-Ladebuchse) aufweisen. Alternativ kann die mindestens einer Ladeschnittstelle auch eine MCS-Ladeschnittstelle (z. B. eine MCS-Ladebuchse) und eine NACS-Ladeschnittstelle (z. B. eine NACS-Ladebuchse) aufweisen.

Weiterhin weist das Verfahren ein elektrisches Verbinden der mindestens einen Ladeschnittstelle, vorzugsweise der mindestens zwei Ladeschnittstellen, mit einem Gleichspannungseingang der Ladevorrichtung. Beispielsweise kann die mindestens eine Ladeschnittstelle bzw. können die mindestens zwei Ladeschnittstellen mittels einer oder mehrere Kabelverbindungen an den Gleichspannungseingang der Ladevorrichtung angeschlossen werden.

Optional kann das Verfahren ferner ein Bereitstellen eines elektrischen Energiespeichers (z. B. eines Hochvolt-Energiespeichers) und ein (z. B. elektrisches) Verbinden des elektrischen Energiespeichers mit einem Gleichspannungsausgang der Ladevorrichtung aufweisen. Beispielsweise kann auch der elektrische Energiespeicher mittels einer oder mehrere Kabelverbindungen an dem Gleichspannungsausgang der Ladevorrichtung angeschlossen werden.

Ein weiterer unabhängiger Aspekt der vorliegenden Offenbarung betrifft ein Ladesystem für ein Elektrofahrzeug (z. B. ein Elektro-Nutzfahrzeug). Bevorzugt handelt es sich dabei um ein Ladesystem, das nach einem Verfahren, wie hierin beschrieben, hergestellt ist. Folglich sollen wiederum alle in Zusammenhang mit dem Verfahren bzw. der Ladevorrichtung beschriebenen Aspekte auch im Zusammenhang mit dem Ladesystem offenbart und beanspruchbar sein. Entsprechendes soll auch umgekehrt gelten.

Das Ladesystem weist eine Ladevorrichtung, wie hierin beschrieben, auf.

Ferner weist das Ladesystem mindestens eine Ladeschnittstelle auf, die mit einem Gleichspannungseingang der Ladevorrichtung elektrisch verbunden ist. Beispielsweise kann die mindestens eine Ladeschnittstelle mittels einer oder mehrere Leitungsverbindungen an dem Gleichspannungseingang der Ladevorrichtung angeschlossen sein.

Gemäß einem Aspekt kann die mindestens eine Ladeschnittstelle eine erste Ladeschnittstelle (z. B. eine MCS-Ladeschnittstelle) und eine zweite Ladeschnittstelle (z. B. eine CCS-Ladeschnittstelle oder NACS-Ladeschnittstelle) aufweisen. Entsprechend kann die mindestens eine Ladeschnittstelle zumindest oder ausschließlich zwei Ladeschnittstellen umfassen. Bevorzugt sind die erste und zweite Ladeschnittstelle dabei unterschiedlich, bspw. nach unterschiedlichen Standards, ausgebildet. Auf vorteilhafte Weise kann dadurch eine möglichst flexible Nutzung vorhandener Ladeinfrastruktur ermöglicht werden.

Nach einem weiteren Aspekt können die erste Ladeschnittstelle und die zweite Ladeschnittstelle jeweils fest (z. B. starr) mit der Ladevorrichtung verbunden sein, vorzugsweise in die Ladevorrichtung integriert sein. Auf vorteilhafte Weise kann dadurch ein Ladesystem mit Double-Header-Konzept realisiert werden.

Zudem oder alternativ können die Ladevorrichtung, die erste Ladeschnittstelle und die zweite Ladeschnittstelle von einem gemeinsamen (z. B. geschlossenen) Gehäuse (z. B. aus Plastik) umhaust sein. Das Gehäuse kann dabei einteilig oder mehrteilig sein. Auf vorteilhafte Weise kann dadurch eine einfache Montage der Komponenten ins Elektrofahrzeug ermöglicht werden.

Zudem oder alternativ können die Ladevorrichtung, die erste Ladeschnittstelle und die zweite Ladeschnittstelle zusammen eine gemeinsame Baugruppe bilden. Auf vorteilhafte Weise kann dadurch ebenfalls wiederum eine einfache Montage der Komponenten ins Elektrofahrzeug ermöglicht werden.

Zudem oder alternativ können die erste und zweite Ladeschnittstelle nebeneinander (z. B. übereinander) und/oder aneinander angrenzend angeordnet sein. Auf vorteilhafte Weise kann dadurch eine zentrale Stelle zum Anschluss der Ladeinfrastruktur bereitgestellt werden.

Zudem oder alternativ kann der Gleichspannungseingang als ein interner Gleichspannungseingang ausgebildet sein. Entsprechend kann der Gleichspannungseingang bevorzugt innerhalb der Ladevorrichtung (z. B. innerhalb des Gehäuses) angeordnet sein und/oder von außen nicht unmittelbar zugänglich sein.

Zudem oder alternativ kann auch der Wechselspannungseingang ein interner Wechselspannungseingang ausgebildet sein. Entsprechend kann auch der Wechselspannungseingang bevorzugt innerhalb der Ladevorrichtung (z. B. innerhalb des Gehäuses) angeordnet sein und/oder von außen nicht unmittelbar zugänglich sein.

Gemäß einem weiteren Aspekt kann das Ladesystem eine erste Ladeklappe aufweisen. Beispielsweise kann die erste Ladeklappe im Bereich der ersten Ladeschnittstelle angeordnet und/oder an die erste Ladeschnittstelle montiert sein. Die erste Ladeklappe kann zwischen einer Schließstellung, in welcher die erste Ladeklappe die erste Ladeschnittstelle (z. B. vollständig) verschließt, und einer Offenstellung, in welcher die erste Ladeklappe die erste Ladeschnittstelle (z. B. vollständig) freigibt, bewegbar (z. B. schwenkbar) sein. Beispielsweise kann in der Schließstellung ein Ladestecker der fahrzeugexternen Ladestation nicht mit der ersten Ladeschnittstelle verbindbar bzw. nicht in die erste Ladeschnittstelle einsteckbar sein. Hingegen soll in der Offenstellung bevorzugt ein Verbinden bzw. Einstecken des Ladesteckers möglich sein.

Weiterhin kann das Ladesystem eine zweite Ladeklappe aufweisen. Beispielsweise kann die zweite Ladeklappe im Bereich der zweiten Ladeschnittstelle angeordnet und/oder an die zweite Ladeschnittstelle montiert sein. Auch die zweite Ladeklappe kann zwischen einer Schließstellung, in welcher die zweite Ladeklappe die zweite Ladeschnittstelle (z. B. vollständig) verschließt, und einer Offenstellung, in welcher die zweite Ladeklappe die zweite Ladeschnittstelle (z. B. vollständig) freigibt, bewegbar (z. B. schwenkbar) sein.

Ferner weist das Ladesystem eine Verriegelungseinrichtung auf, die ausgebildet ist, die zweite Ladeklappe zu verriegeln, falls die erste Ladeklappe in der Offenstellung ist, und/oder die erste Ladeklappe zu verriegeln, falls die zweite Ladeklappe in der Offenstellung ist. Bevorzugt soll somit, falls die erste Ladeklappe in der Offenstellung ist, ein Öffnen der zweiten Ladeklappe nicht möglich sein und umgekehrt. Auf vorteilhafte Weise kann dadurch eine Absicherung der jeweils nicht verwendeten Ladeschnittstelle ermöglicht werden. Zudem können schädliche bzw. interferierende Doppelladungen ausgeschlossen werden.

Nach einem weiteren Aspekt kann das Ladesystem ferner einen elektrischen Energiespeicher aufweisen. Bevorzugt ist der elektrischen Energiespeicher dabei mit dem Gleichspannungsausgang und/oder Wechselspannungsausgang elektrisch verbunden.

Nach einem weiteren Aspekt kann die Steuereinrichtung eingerichtet sein, die mehreren Schaltelemente in Abhängigkeit davon, ob die erste oder zweite Ladeschnittstelle (z. B. aktuell) mit der fahrzeugexternen Ladestation verbunden ist, (z. B. automatisch) in die erste Schaltstellung oder zweite Schaltstellung zu schalten. Beispielsweise kann das Ladesystem hierzu über entsprechende Belegungssensoren verfügen, welche sensieren, ob und welche der Ladeschnittstellen mit einem Ladestecker belegt sind. Im Fall, dass das Ladesystem bzw. die Ladevorrichtung einen Wechselspannungseingang aufweist und/oder auch zur Durchführung eines Wechselstrom-Ladeverfahrens ausgebildet ist, kann die Steuereinrichtung auch eingerichtet sein, die mehreren Schaltelemente in Abhängigkeit davon, ob die erste oder zweite Ladeschnittstelle (z. B. aktuell) mit der fahrzeugexternen Ladestation verbunden ist, (z. B. automatisch) in die erste Schaltstellung oder zweite Schaltstellung oder dritte Schaltstellung zu schalten. Auf vorteilhafte Weise kann dadurch automatisch die für das jeweilige Ladeverfahren passende Ladearchitektur bereitgestellt werden.

Ein weiterer unabhängiger Aspekt der vorliegenden Offenbarung betrifft ein Kraftfahrzeug, aufweisend eine Ladevorrichtung, wie hierin beschrieben, und/oder ein Ladesystem, wie hierin beschrieben. Folglich sollen die vorstehend im Zusammenhang mit der Ladevorrichtung und dem Ladesystem beschriebenen Merkmale auch im Zusammenhang mit dem Kraftfahrzeug offenbart und beanspruchbar sein. Entsprechendes soll auch umgekehrt gelten. Bevorzugt ist das Kraftfahrzeug ein Hybrid- oder Elektrofahrzeug, besonders bevorzugt ein Hybrid-Nutzfahrzeug oder Elektro-Nutzfahrzeug. Unter einem Nutzfahrzeug kann dabei im Allgemeinen bspw. ein Fahrzeug verstanden werden, das durch seine Bauart und Einrichtung speziell zur Beförderung von Personen, zum Transport von Gütern oder zum Ziehen von Anhängerfahrzeugen ausgelegt ist. Beispielsweise kann das Nutzfahrzeug ein Lastkraftwagen, ein Sattelschlepper, ein Baustellenfahrzeug, ein Omnibus und/oder eine landwirtschaftliche Maschine (z. B. ein Traktor) sein.

Die zuvor beschriebenen Ausführungsformen und Merkmale sind beliebig miteinander kombinierbar. Weitere Einzelheiten und Vorteile werden im Folgenden unter Bezug auf die beigefügten Zeichnungen beschrieben. Es zeigen
- Figur 1:: eine schematische Darstellung eines Elektrofahrzeugs gemäß einer Ausführungsform;
- Figur 2:: eine schematische Darstellung eines Ladesystems gemäß einer Ausführungsform;
- Figuren 3A und 3B:: eine schematische Darstellung einer Ladevorrichtung gemäß einer Ausführungsform in verschiedenen Schaltzuständen;
- Figuren 4A und 4B:: eine schematische Darstellung eines Ladesystems gemäß einer weiteren Ausführungsform in verschiedenen Schaltzuständen;
- Figuren 5A-5C:: schematische Darstellungen verschiedener Ladeklappenanordnungen gemäß einer Ausführungsform;
- Figuren 6A und 6B:: eine schematische Darstellung eines Ladesystems gemäß einer weiteren Ausführungsform in verschiedenen Schaltzuständen;
- Figuren 7A und 7B:: eine schematische Darstellung eines Ladesystems gemäß einer weiteren Ausführungsform in verschiedenen Schaltzuständen; und
- Figuren 8A-8B:: schematische Darstellungen eines Ladesystems gemäß weiteren Ausführungsform;

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

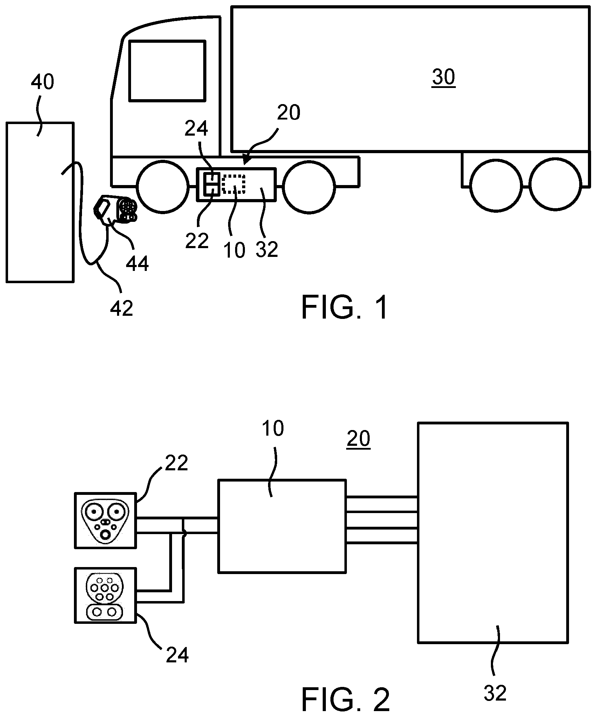

Figur 1 zeigt ein Elektrofahrzeug 30 gemäß einer Ausführungsform. Bei dem Elektrofahrzeug 30 kann es sich bspw. wie dargestellt um ein Elektro-Nutzfahrzeug handeln. Entsprechend kann das Elektrofahrzeug 30 mindestens eine elektrische Antriebseinheit (nicht dargestellt) zum Vortrieb des Elektrofahrzeugs 30, z. B. einen zentralen Elektroantrieb, mehrerer Elektroradnabenantriebe oder mehrerer radnaher Elektroantriebe, aufweisen. Weiterhin kann das Elektrofahrzeug 30 einen elektrischen Energiespeicher 32 aufweisen. Der elektrische Energiespeicher 32 kann elektrische Energie für die mindestens eine elektrische Antriebseinheit bereitstellen. Der elektrische Energiespeicher 32 kann über eine fahrzeugexterne Ladestation 40 aufladbar sein.

Hierzu weist das Elektrofahrzeug 30 mindestens eine Ladeschnittstelle 22, 24 auf. Beispielsweise kann die mindestens eine Ladeschnittstelle 22, 24 in Form ein oder mehrerer Ladebuchsen ausgebildet sein. In diese kann ein mit der Ladestation 40 über ein Ladekabel 42 verbundener Ladestecker 44 einsteckbar sein. Entsprechend kann über die mindestens eine Ladeschnittstelle 22, 24 elektrische Energie von der Ladestation 40 ins Elektrofahrzeug 30 bzw. in den elektrischen Energiespeicher 32 einspeisbar sein.

Für eine möglichst flexible Nutzung der vorhandenen Ladeinfrastruktur weist die mindestens eine Ladeschnittstelle 22, 24 bevorzugt zumindest zwei Ladeschnittstellen 22, 24 auf. Besonders bevorzugt handelt es sich bei einer der zumindest zwei Ladeschnittstellen 22, 24, welche im Folgenden auch als erste Ladeschnittstelle 22 bezeichnet werden kann, um eine MCS-Ladeschnittstelle (z. B. eine MCS-Ladebuchse zum Einstecken eines MCS-Ladesteckers). Ferner können die zumindest zwei Ladeschnittstellen 22, 24 eine zweite Ladeschnittstelle 24 aufweisen, die bspw. als eine CCS-Ladeschnittstelle (z. B. eine CCS2-Ladebuchse zum Einstecken eines CCS2-Ladesteckers) oder NACS-Ladeschnittstelle ausgebildet sein kann. Entsprechend kann das Elektrofahrzeug 30 bzw. der elektrische Energiespeicher 32 sowohl über eine MCS-Ladestation als auch über eine CCS-Ladestation aufladbar sein.

Aus Sicherheitsgründen und/oder zur Steuerung des Ladevorgangs weist das Elektrofahrzeug 30 ferner eine Ladevorrichtung 10 auf, über welche die Ladeschnittstellen 22, 24 mit dem elektrischen Energiespeicher 32 elektrisch verbindbar sind. Mittels der Ladevorrichtung 10 kann die für das jeweilige Ladeverfahren benötige fahrzeugseitige Ladearchitektur mit entsprechenden Kurzschlussgrenzen etc. bereitgestellt werden. Bevorzugt ermöglicht die Ladevorrichtung 10 somit ein (z. B. wahlweises) Laden des elektrischen Energiespeichers 32 mit einem ersten Ladeverfahren (z. B. dem MCS-Ladeverfahren) und einem zweiten Ladeverfahren (z. B. dem CCS- oder NACS-Ladeverfahren). Hierzu kann die Ladevorrichtung 10 zumindest zwischen zwei Konfigurationen umschaltbar sein. Die Ladevorrichtung 10 und die Ladeschnittstellen 22, 24 können ggf. zusammen mit dem elektrischen Energiespeicher 32 ein Ladesystem 20 bilden, was in Figur 2 nochmals illustriert ist.

Die weiteren Figuren zeigen jeweils verschiedene Schaltzustände bzw. Ausführungsformen der Ladevorrichtung 10 bzw. des Ladesystems 20.

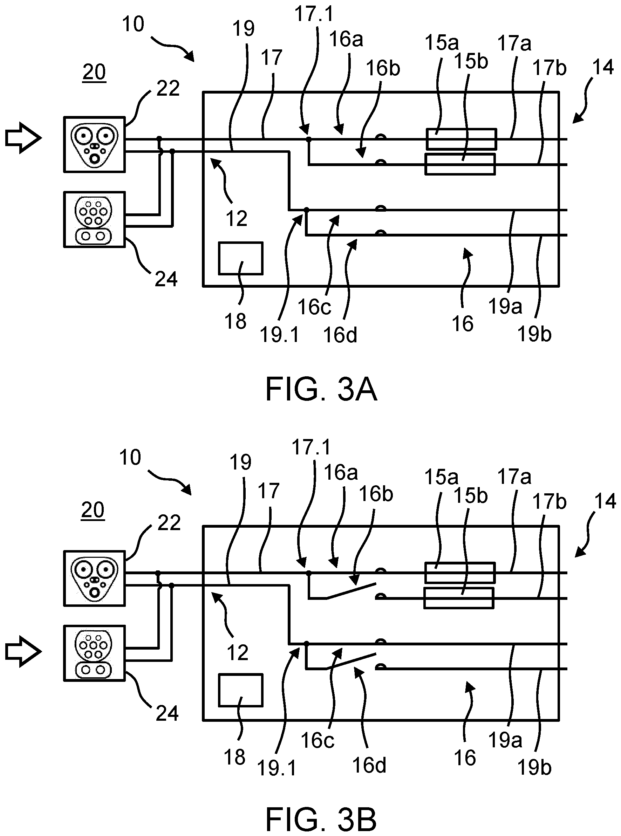

Die Figuren 3A und 3B zeigen hierbei eine erste Ausführungsform der Ladevorrichtung 10. Die Ladevorrichtung 10 weist einen Gleichspannungseingang 12, einen Gleichspannungsausgang 14, eine schaltbare Verbindungseinrichtung 16 und eine Steuereinrichtung 18 auf.

Der Gleichspannungseingang 12 dient zum elektrischen Verbinden mit der mindestens einen Ladeschnittstelle 22, 24 des Elektrofahrzeugs 30. Beispielsweise kann der Gleichspannungseingang 12 über ein oder Verbindungsleitungen mit der mindestens einen Ladeschnittstelle 22, 24 verbunden oder verbindbar sein. Der Gleichspannungseingang 12 kann zwei DC-Eingangskontakte, bspw. einen positiven DC-Eingangskontakt (DC+) und einen negativen DC-Eingangskontakt (DC-) aufweisen.

Der Gleichspannungsausgang 14 dient zum Verbinden mit einem elektrischen Energiespeicher 32 (nicht dargestellt). Beispielsweise kann der Gleichspannungsausgang 14 über ein oder Verbindungsleitungen mit dem elektrischen Energiespeicher 32 verbunden oder verbindbar sein. Der Gleichspannungsausgang 14 kann vier DC-Ausgangskontakte aufweisen, bspw. einen ersten und zweiten positiven DC-Ausgangskontakt und einen ersten und zweiten negativen DC-Ausgangskontakt.

Der Gleichspannungseingang 12 und der Gleichspannungsausgang 14 sind über die Verbindungseinrichtung 16 miteinander elektrisch verbindbar bzw. verbunden. Über die Verbindungseinrichtung 16 kann somit eine elektrische Verbindung zwischen den DC-Eingangskontakten des Gleichspannungseingangs 12 und den DC-Ausgangskontakten des Gleichspannungsausgangs 14 herstellbar sein.

Beispielsweise kann die Verbindungseinrichtung 16 hierzu einen positiven Ladestrompfad 17 aufweisen, der sich ausgehend vom Gleichspannungseingang 12 an einer positiven Verzweigungsstelle 17.1 in einen ersten positiven Ladestromteilpfad 17a und einen zweiten positiven Ladestromteilpfad 17b verzweigt. Im ersten positiven Ladestromteilpfad 17a kann ein Schaltelement (z. B. ein Schaltschütz), vorliegend ein erstes positives Schaltelement 16a, angeordnet sein. Beispielsweise kann das erste positive Schaltelement 16a zwischen der positiven Verzweigungsstelle 17.1 und dem Gleichspannungsausgang 14 im ersten positiven Ladestromteilpfad 17a angeordnet sein. Bevorzugt weist der erste positive Ladestromteilpfad 17a ferner eine Sicherung (z. B. eine Schmelzsicherung), vorliegend Sicherung 15a, auf.

Im zweiten positiven Ladestromteilpfad 17b kann ebenfalls ein Schaltelement (z. B. ein Schaltschütz), vorliegend ein zweites positives Schaltelement 16b angeordnet sein. Beispielsweise kann das zweite positive Schaltelement 16b zwischen der positiven Verzweigungsstelle 17.1 und dem Gleichspannungsausgang 14 im zweiten positiven Ladestromteilpfad 17b angeordnet sein. Bevorzugt ist auch im zweiten positiven Ladestromteilpfad 17b eine Sicherung (z. B. eine Schmelzsicherung), vorliegend, die weitere Sicherung 15b, angeordnet. Durch entsprechendes Schalten der beiden positiven Schaltelemente 16a und 16b kann somit über den positiven Ladestrompfad 17 bspw. der positive DC-Eingangskontakt des Gleichspannungseingang 12 wahlweise mit dem ersten und zweiten positiven DC-Ausgangskontakt des Gleichspannungsausgangs 14 oder nur mit dem ersten oder zweiten positiven DC-Ausgangskontakt verbindbar sein. Durch Öffnen der beiden positiven Schaltelemente 16a und 16b kann der positive DC-Eingangskontakt galvanisch vom ersten und zweiten positiven DC-Ausgangskontakt trennbar sein.

Ferner kann die Verbindungseinrichtung 16 einen negativen Ladestrompfad 19 aufweisen, der sich ausgehend vom Gleichspannungseingang 12 an einer negativen Verzweigungsstelle 19.1 in einen ersten negativen Ladestromteilpfad 19a und einen zweiten negativen Ladestromteilpfad 19b verzweigt. Im ersten negativen Ladestromteilpfad 19a kann ein Schaltelement (z. B. ein Schaltschütz), nämlich ein erstes negatives Schaltelement 16c, und ggf. auch eine Sicherung (nicht dargestellt) angeordnet sein. Im zweiten negativen Ladestromteilpfad 19b kann ebenfalls ein Schaltelement (z. B. ein Schaltschütz), nämlich ein zweites negatives Schaltelement 16d, und ggf. auch eine Sicherung (nicht dargestellt) angeordnet sein. Durch entsprechendes Schalten der beiden negativen Schaltelemente 16c und 16d kann über den negativen Ladestrompfad 19 bspw. der negative DC-Eingangskontakt des Gleichspannungseingangs 12 wahlweise mit dem ersten und zweiten negativen DC-Ausgangskontakt des Gleichspannungsausgangs 14 oder nur mit dem ersten oder zweiten negativen DC-Ausgangskontakt verbindbar sein. Durch Öffnen der beiden negativen Schaltelemente 16c und 16d kann der negative DC-Eingangskontakt galvanisch vom ersten und zweiten negativen DC-Ausgangskontakt trennbar sein.

Zum Betreiben bzw. Schalten der Schaltelemente ist die Steuereinrichtung 18 vorgesehen. Diese kann bspw. über mehrere aus Gründen der Übersichtlichkeit nicht dargestellte Signalleitungen mit den jeweiligen Schaltelementen verbunden sein. Mittels der Steuereinrichtung 18 können die jeweiligen Schaltelemente, vorzugsweise unabhängig voneinander, öffenbar und schließbar sein.

Um mit der Ladevorrichtung 10 verschiedene Ladeverfahren zu realisieren, ist die Steuereinrichtung 18 ferner eingerichtet, die mehreren Schaltelemente zumindest in eine, in Figur 3A dargestellte, erste Schaltstellung S₁ und in eine, in Figur 3B dargestellte, zweite Schaltstellung S₂ zu schalten. Bevorzugt dient die erste Schaltstellung S₁ dabei zum Laden des elektrischen Energiespeichers 32 mittels des MCS-Ladeverfahrens, während die zweite Schaltstellung S₁ bevorzugt zum Laden des elektrischen Energiespeichers 32 mittels des CCS- oder NACS-Ladeverfahrens dient.

In der ersten Schaltstellung S₁ können das erste und zweite positive Schaltelement 16a, 16b sowie das erste und zweite negative Schaltelement 16c, 16d jeweils geschlossen geschaltet sein. Entsprechend kann in der ersten Schaltstellung S₁ ein DC-Ladestrom im dem ersten und zweiten positiven Ladestromteilpfad 17a, 17b und im ersten und zweiten negativen Ladestromteilpfad 19a, 19b fließen.

In der zweiten Schaltstellung S₂ hingegen können sowohl das erste und zweite positive Schaltelement 16a, 16b als auch das erste und zweite negative Schaltelement 16c, 16d jeweils unterschiedlich geschaltet sein. Beispielsweise kann in der zweiten Schaltstellung S₂, wie dargestellt, das erste positive Schaltelement 16a und das erste negative Schaltelement 16c geschlossen sein, während das zweite positive Schaltelement 16b und das zweite negative Schaltelement 16d geöffnet sein können. Entsprechend kann in der zweiten Schaltstellung S₂ der DC-Ladestrom nur im ersten oder zweiten positiven Ladestromteilpfad 17a, 17b bzw. nur im ersten oder zweiten negativen Ladestromteilpfad 19a, 19b fließen.

Durch das Aufteilen des DC-Ladestroms und entsprechendes Auslegen der Komponenten kann die Ladevorrichtung 10 in der ersten Schaltstellung S₁ somit eine erste Kurzschlussgrenze aufweisen, die sich von einer zweiten Kurzschlussgrenze der Ladevorrichtung 10 in der zweiten Schaltstellung S₂ unterscheidet. Entsprechend kann die Ladevorrichtung 10 in der ersten und zweiten Schaltstellung S₁, S₂ jeweils für unterschiedliche maximale Ladespannungen und/oder maximale Ladeströme eingerichtet sein.

Bevorzugt ist die Ladevorrichtung 10 zum Ermöglichen eines MCS-Ladens, bspw. in der ersten Schaltstellung S₁, grundsätzlich für eine maximale Ladespannung von 1250 Volt und/oder einen maximalen Ladestrom von 3000 Ampere ausgelegt bzw. eingerichtet.

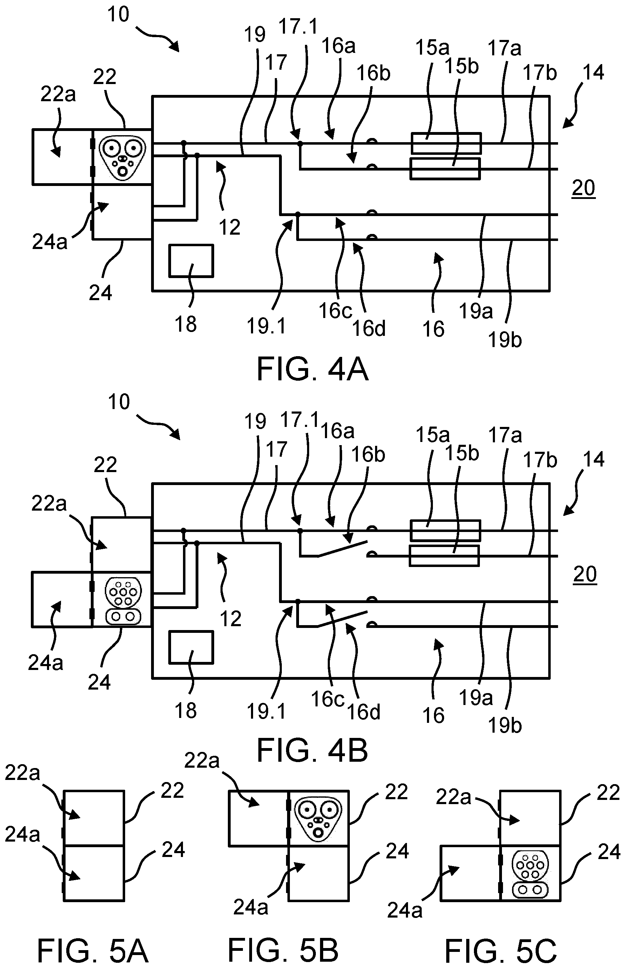

Die Figuren 4A und 4B zeigen eine weitere Ausführungsform der Ladevorrichtung 10 bzw. des Ladesystems 20. Im Gegensatz zu der Ausführung in den Figuren 3A und 3B sind die erste und zweite Ladeschnittstelle 22, 24 vorliegend in die Ladevorrichtung 10 integriert. Entsprechend können die Ladevorrichtung 10 und die erste und zweite Ladeschnittstelle 22, 24 eine gemeinsame Baugruppe bilden. Beispielsweise können die entsprechenden Komponenten in einem gemeinsamen Gehäuse aufgenommen und/oder von einem Gehäuse umhaust sein.

Der Gleichspannungseingang 12 ist vorliegend mit der ersten und zweiten Ladeschnittstelle 22, 24 elektrisch verbunden. Beispielsweise kann der positive DC-Eingangskontakt des Gleichspannungseingangs 12 mit einem DC-Stromkontakt der MSC-Ladeschnittstelle und einem DC-Stromkontakt der CCS-Ladeschnittstelle verbunden sein, während der negative DC-Eingangskontakt des Gleichspannungseingangs 12 mit einem weiteren DC-Stromkontakt der MSC-Ladeschnittstelle und einem weiteren DC-Stromkontakt der CCS-Ladeschnittstelle verbunden sein kann.

Der Gleichspannungseingang 12 kann hierbei als ein interner und/oder virtueller Gleichspannungseingang 12 ausgebildet sein, der bevorzugt von außen nicht unmittelbar zugänglich ist.

Der Gleichspannungsausgang 14 kann hingegen als physischer Ausgang ausgebildet sein, an dem bspw. ein oder mehrere Leitungsverbindungen anschließbar sind.

Weiterhin zeichnet sich diese Ausführungsform durch Ladeklappen 22a, 24a für die jeweiligen Ladeschnittstellen 22, 24 aus, deren Einstellungsmöglichkeiten in den Figuren 5A-5C nochmals im Detail dargestellt sind.

Beispielsweise kann das Ladesystem 20 eine erste Ladeklappe 22a aufweisen, die der ersten Ladeschnittstellen 22 zugeordnet sein kann, und eine zweite Ladeklappe 24a aufweisen, die der zweiten Ladeschnittstellen 24 zugeordnet sein kann. Jede der Ladeklappen 22a und 24a ist bevorzugt zwischen einer Schließstellung, in welcher die jeweilige Ladeklappe 22a, 24a die erste bzw. zweite Ladeschnittstelle 22, 24 verschließt, und einer Offenstellung, in welcher die jeweilige Ladeklappe 22a, 24a die erste bzw. zweite Ladeschnittstelle 22, 24 freigibt, bewegbar. Vorzugsweise ist nur in der Offenstellung der jeweiligen Ladeklappe 22a, 24a ein Einstecken eines entsprechenden Ladesteckers 44 in die jeweilige Ladeschnittstelle 22, 24 möglich.

Um die jeweiligen Ladeschnittstellen 22, 24 gegeneinander abzusichern, kann das Ladesystem 20 ferner eine Verriegelungseinrichtung (nicht dargestellt) aufweisen, die ausgebildet ist, die erste Ladeklappe 22a zu verriegeln, falls die zweite Ladeklappe 24a in der Offenstellung ist, und die zweite Ladeklappe 24a zu verriegeln, falls die erste Ladeklappe 22a in der Offenstellung ist. Beispielsweise kann die Verriegelungseinrichtung einen oder mehrere, z. B. pneumatisch, hydraulisch und/oder elektrisch betätigbare, Stellelemente aufweisen, die die jeweilige Ladeklappe 22a, 24a in der Schließstellung gegen ein Öffnen sichern.

Insgesamt können dadurch bspw. die in den Figuren 5A-5C dargestellten Einstellungen der Ladeklappe 22a, 24a realisierbar sein, darunter eine erste Einstellung, in der beide Ladeklappen 22a, 24a geschlossen sind, eine zweite Einstellung, in der die erste Ladeklappe 22a in der Offenstellung und die zweite Ladeklappe 24a in der verriegelten Schließstellung ist, und eine dritte Einstellung, in der die zweite Ladeklappe 24a in der Offenstellung und die erste Ladeklappe 22a in der verriegelten Schließstellung ist.

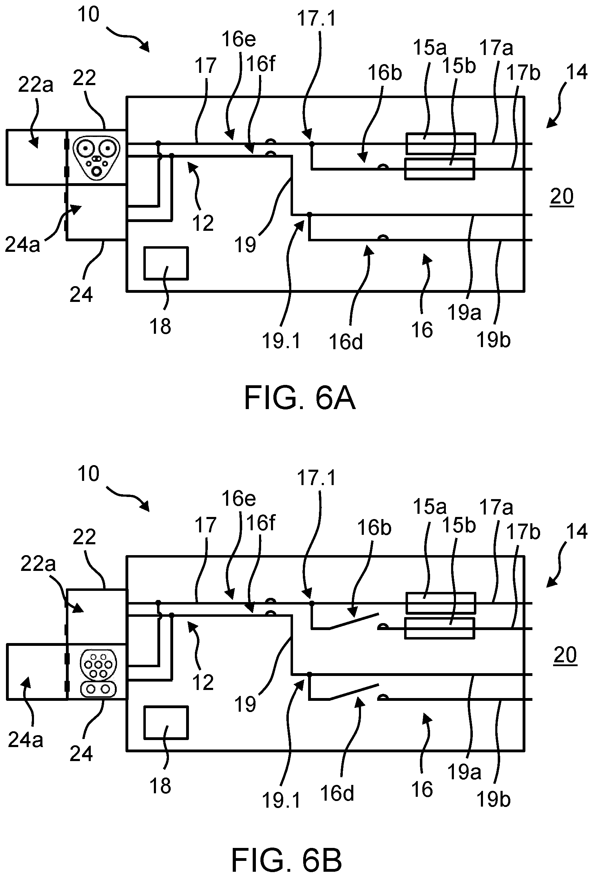

Die Figuren 6A und 6B zeigen eine weitere Ausführungsform der Ladevorrichtung 10 bzw. des Ladesystems 20. Im Unterschied zu dem vorstehend im Zusammenhang mit den Figuren 4A und 4B beschriebenen Ausführungsform weist die Ladevorrichtung 10 bzw. das Ladesystem 20 vorliegend eine andere Ausführung der Verbindungseinrichtung 16 auf.

In Übereinstimmung mit der Ausführungsform der Figuren 4A und 4B weist die Verbindungseinrichtung 16 auch hier einen positiven Ladestrompfad 17 auf, der sich ausgehend vom (internen bzw. virtuellen) Gleichspannungseingang 12 an einer positiven Verzweigungsstelle 17.1 in einen ersten positiven Ladestromteilpfad 17a und einen zweiten positiven Ladestromteilpfad 17b verzweigt. Ferner weist die Verbindungseinrichtung 16 auch einen negativen Ladestrompfad 19 auf, der sich ausgehend vom (internen bzw. virtuellen) Gleichspannungseingang 12 an einer negativen Verzweigungsstelle 19.1 in einen ersten negativen Ladestromteilpfad 19a und einen zweiten negativen Ladestromteilpfad 19b verzweigt.

In Übereinstimmung mit der Ausführungsform der Figuren 4A und 4B sind ferner insgesamt vier Schaltelemente vorhanden, wobei sich deren Anordnung bzw. Ausführung von der Ausführungsform der Figuren 4A und 4B unterscheidet.

So weist die Verbindungseinrichtung 16 ein positives Haupt-Schaltelement 16e (z. B. in Form eines Hauptschaltschützes) auf, das im positiven Ladestrompfad 17 zwischen dem Gleichspannungseingang 12 und der positiven Verzweigungsstelle 17.1 angeordnet ist. Weiterhin weist die Verbindungseinrichtung 16 ein negatives Haupt-Schaltelement 16f (z. B. in Form eines Hauptschaltschützes) auf, das im negativen Ladestrompfad 19 zwischen dem Gleichspannungseingang 12 und der negativen Verzweigungsstelle 19.1 angeordnet ist.

Der erste positive Ladestromteilpfad 17a weist kein Schaltelement auf. Bevorzugt ist allerdings eine Sicherung, nämlich Sicherung 15a, im ersten positiven Ladestromteilpfad 17a angeordnet. Demgegenüber weist der zweite positive Ladestromteilpfad 17b ein Schaltelement (z. B. ein Schaltschütz) auf, welches vorliegend als zweites positives Schaltelement 16b bezeichnet werden kann. Bevorzugt weist auch der zweite positive Ladestromteilpfad 17b eine Sicherung, nämlich eine weitere Sicherung 15b auf. Das zweite positive Schaltelement 16b kann dabei zwischen der positiven Verzweigungsstelle 17.1 und dem Gleichspannungsausgang 14, vorzugsweise zwischen der positiven Verzweigungsstelle 17.1 und der weiteren Sicherung 15b, angeordnet sein.

Auch der erste negative Ladestromteilpfad 19a weist kein Schaltelement auf. Optional kann allerdings eine Sicherung (nicht dargestellt) im ersten negativen Ladestromteilpfad 19a angeordnet sein. Demgegenüber weist der zweite negative Ladestromteilpfad 19b ein Schaltelement (z. B. ein Schaltschütz) auf, welches vorliegend als zweites negatives Schaltelement 16d bezeichnet werden kann. Optional kann auch der zweite negative Ladestromteilpfad 19b eine Sicherung (nicht dargestellt) aufweisen. Das zweite negative Schaltelement 16d kann dabei zwischen der negativen Verzweigungsstelle 19.1 und dem Gleichspannungsausgang 14 angeordnet sein.

Durch ein entsprechendes Schalten der beiden Haupt-Schaltelemente 16e und 16f sowie der Schaltelemente 16b und 16d können wiederum verschiedene Schaltungszustände, bspw. für verschiedene Ladeverfahren, in der Ladevorrichtung 10 realisierbar sein. Beispielsweise kann die Steuereinrichtung 18 eingerichtet sein, die mehreren Schaltelemente der Ladevorrichtung 10 zumindest in die, in Figur 6A dargestellte, erste Schaltstellung S₁ und in die, in Figur 6B dargestellte, zweite Schaltstellung S₂ zu schalten. Bevorzugt dient die erste Schaltstellung S₁ wiederum zum Laden des elektrischen Energiespeichers 32 mittels des MCS-Ladeverfahrens, während die zweite Schaltstellung S₁ bevorzugt zum Laden des elektrischen Energiespeichers 32 mittels des CCS- oder NACS-Ladeverfahrens dient.

In der ersten Schaltstellung S₁ können die das positive Haupt-Schaltelement 16e und das negative Haupt-Schaltelement 16f sowie das zweite positive Schaltelement 16b und zweite negative Schaltelement 16d jeweils geschlossen geschaltet sein. Beispielsweise kann hier der positive DC-Eingangskontakt des Gleichspannungseingang 12 mit dem ersten und zweiten positiven DC-Ausgangskontakt des Gleichspannungsausgangs 14 sowie der negative DC-Eingangskontakt des Gleichspannungseingang 12 mit dem ersten und zweiten negativen DC-Ausgangskontakt des Gleichspannungsausgangs 14 verbunden sein. Entsprechend kann in der ersten Schaltstellung S₁ ein DC-Ladestrom im ersten und zweiten positiven Ladestromteilpfad 17a, 17b und im ersten und zweiten negativen Ladestromteilpfad 19a, 19b fließen.

In der zweiten Schaltstellung S₂ hingegen können das positive Haupt-Schaltelement 16e und das negative Haupt-Schaltelement 16f jeweils geschlossen sein, während das zweite positive Schaltelement 16b und zweite negative Schaltelement 16d jeweils geöffnet geschaltet sein können. Beispielsweise kann hier der positive DC-Eingangskontakt des Gleichspannungseingang 12 nur mit dem ersten oder zweiten positiven DC-Ausgangskontakt des Gleichspannungsausgangs 14 und der negative DC-Eingangskontakt des Gleichspannungseingang 12 nur mit dem ersten oder zweiten negativen DC-Ausgangskontakt des Gleichspannungsausgangs 14 verbunden sein. Entsprechend kann in der zweiten Schaltstellung S₂ der DC-Ladestrom nur im ersten positiven Ladestromteilpfad 17a bzw. nur im ersten negativen Ladestromteilpfad 19a fließen.

Bevorzugt sind das zweite positive Schaltelement 16b und das positive Haupt-Schaltelement 16e unterschiedlich dimensioniert. Beispielsweise kann das zweite positive Schaltelement 16b kleiner dimensioniert sein als das positive Haupt-Schaltelement 16e. Zudem oder alternativ können auch das zweite negative Schaltelement 16d und das negative Haupt-Schaltelement 16f unterschiedlich dimensioniert sein. Beispielsweise kann das zweite negative Schaltelement 16d kleiner dimensioniert sein als das negative Haupt-Schaltelement 16f. Demgegenüber können die beiden Haupt-Schaltelemente 16e und 16f und/oder die zweiten positiven und negativen Schaltelemente 16b und 16d jeweils als Gleichteile ausgebildet sein. Ferner kann das zweite positive Schaltelement 16b und/oder das zweite negative Schaltelement 16d ohne Automotive-Safety-Integrity-Level-(ASIL)-Anforderung ausgelegt sein.

Weiterhin kann die Steuereinrichtung 18 bevorzugt eingerichtet sein, die mehreren Schaltelemente der Ladevorrichtung 10 in eine (nicht dargestellte) dritte Schaltstellung S₃ zu schalten, in der zumindest das positive Haupt-Schaltelement 16e und das negative Haupt-Schaltelement 16f jeweils geöffnet sind. Optional können in der dritten Schaltstellung S₃ auch das zweite positive Schaltelement 16b und das zweite negative Schaltelement 16d geöffnet sein. Hierdurch kann der Gleichspannungseingang 12 vom Gleichspannungsausgang 14 galvanisch trennbar sein. Diese dritte Schaltstellung S₃ kann bspw. während eines (später noch eingehender beschriebenen) AC-Ladens eingenommen werden.

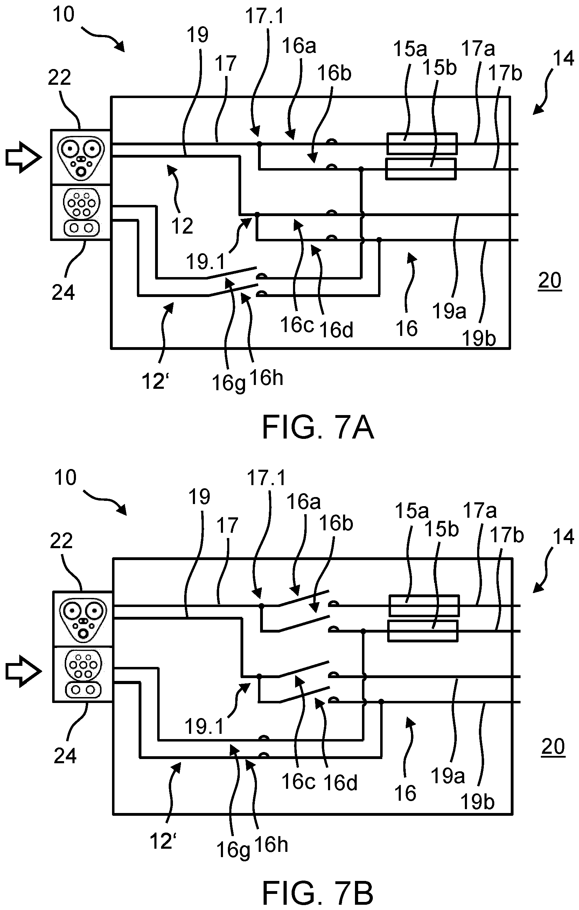

Die Figuren 7A und 7B zeigen eine weitere Ausführungsform der Ladevorrichtung 10 bzw. des Ladesystems 20. Diese Ausführungsform basiert im Wesentlichen auf der in den Figuren 4A und 4B gezeigten Ausführungsform, wobei der (interne bzw. virtuelle) Gleichspannungseingang 12 nur mit der ersten Ladeschnittstelle 22 verbunden ist.

Zusätzlich weist die vorliegende Ladevorrichtung 10 einen weiteren Gleichspannungseingang 12' auf. Bevorzugt ist dieser mit der zweiten Ladeschnittstelle 24 verbunden. Entsprechend kann auch der weitere Gleichspannungseingang 12' ein interner und/oder virtueller weiterer Gleichspannungseingang 12' sein, der bevorzugt von außen nicht unmittelbar zugänglich ist. Der weitere Gleichspannungseingang 12' kann dabei z. B. zwei weitere DC-Eingangskontakte, bspw. einen weiteren positiven DC-Eingangskontakt und einen weiteren negativen DC-Eingangskontakt aufweisen. Zur besseren Unterscheidung kann der Gleichspannungseingang 12 auch als erster Gleichspannungseingang und der weitere Gleichspannungseingang 12' als zweiter Gleichspannungseingang bezeichnet werden.

Über die Verbindungseinrichtung 16 kann auch der weitere Gleichspannungseingang 12' mit dem Gleichspannungsausgang 14 elektrisch verbindbar sein. Beispielsweise kann über die Verbindungseinrichtung 16 der weitere positive DC-Eingangskontakt mit einem der positiven DC-Ausgangskontakte und/oder der weitere negative DC-Eingangskontakt mit einem der negativen DC-Ausgangskontakte verbindbar sein. Insgesamt kann damit über die Verbindungseinrichtung 16 sowohl der erste als auch zweite Gleichspannungseingang mit dem Gleichspannungsausgang 14 elektrisch verbindbar sein.

Hierzu kann die Verbindungseinrichtung 16 bspw. einen weiteren positiven Ladestrompfad 17' aufweisen, über den der zweite Gleichspannungseingang 12' mit dem ersten positiven Ladestrompfad 17 elektrisch verbindbar sein kann. Beispielsweise kann der weitere positive Ladestrompfad 17` an einer Stelle zwischen dem zweiten positiven Schaltelement 16b und dem Gleichspannungsausgang 14, vorzugsweise zwischen dem zweiten positiven Schaltelement 16b und der weiteren Sicherung 15, an den positiven Ladestrompfad 17 elektrisch anbindbar sein. Der weitere positive Ladestrompfad 17' kann dabei ein Schaltelement, nämlich das weitere positive Schaltelement 16g, aufweisen.

Weiterhin kann die Verbindungseinrichtung 16 bspw. einen weiteren negativen Ladestrompfad 19` aufweisen, über den der zweite Gleichspannungseingang 12' mit dem ersten negativen Ladestrompfad 19 elektrisch verbindbar sein kann. Beispielsweise kann der weitere negative Ladestrompfad 19` an einer Stelle zwischen dem zweiten negativen Schaltelement 16d und dem Gleichspannungsausgang 14 an den negativen Ladestrompfad 19 elektrisch anbindbar sein. Auch der weitere negative Ladestrompfad 19' kann ein Schaltelement, nämlich das weitere negative Schaltelement 16h, aufweisen.

Insgesamt kann die Verbindungseinrichtung 16 in dieser Ausführungsform damit (z. B. ausschließlich) sechs Schaltelemente aufweisen.

Zur Realisierung verschiedener Ladeverfahren kann die Steuereinrichtung 18 wiederum eingerichtet sein, die mehreren Schaltelemente zumindest in eine, in Figur 7A dargestellte, erste Schaltstellung S₁ und in eine, in Figur 7B dargestellte, zweite Schaltstellung S₂ zu schalten. Bevorzugt dient die erste Schaltstellung S₁ dabei zum Laden des elektrischen Energiespeichers 32 mittels des MCS-Ladeverfahrens, während die zweite Schaltstellung S₁ bevorzugt zum Laden des elektrischen Energiespeichers 32 mittels des CCS- oder NACS-Ladeverfahrens dient.

In der ersten Schaltstellung S₁ können dabei das erste und zweite positive Schaltelement 16a, 16b sowie das erste und zweite negative Schaltelement 16c, 16d jeweils geschlossen geschaltet sein. Demgegenüber sind das weitere positive Schaltelement 16g und das weitere negative Schaltelement 16h geöffnet geschalten. Entsprechend können in der ersten Schaltstellung S₁ ausschließlich, der Gleichspannungseingang 12 und der Gleichspannungsausgang 14 miteinander elektrisch verbunden sein, während der weitere Gleichspannungseingang 12' und der Gleichspannungsausgang 14 bevorzugt voneinander galvanisch getrennt sind.

In der zweiten Schaltstellung S₂ hingegen können das erste und zweite positive Schaltelement 16a, 16b sowie das erste und zweite negative Schaltelement 16c, 16d jeweils geöffnet geschaltet sein. Demgegenüber sind das weitere positive Schaltelement 16g und das weitere negative Schaltelement 16h geschlossen geschalten. Entsprechend können in der zweiten Schaltstellung S₂ ausschließlich der weitere Gleichspannungseingang 12' und der Gleichspannungsausgang 14 miteinander elektrisch verbunden sein, während der Gleichspannungseingang 12 und der Gleichspannungsausgang 14 bevorzugt voneinander galvanisch getrennt sind.

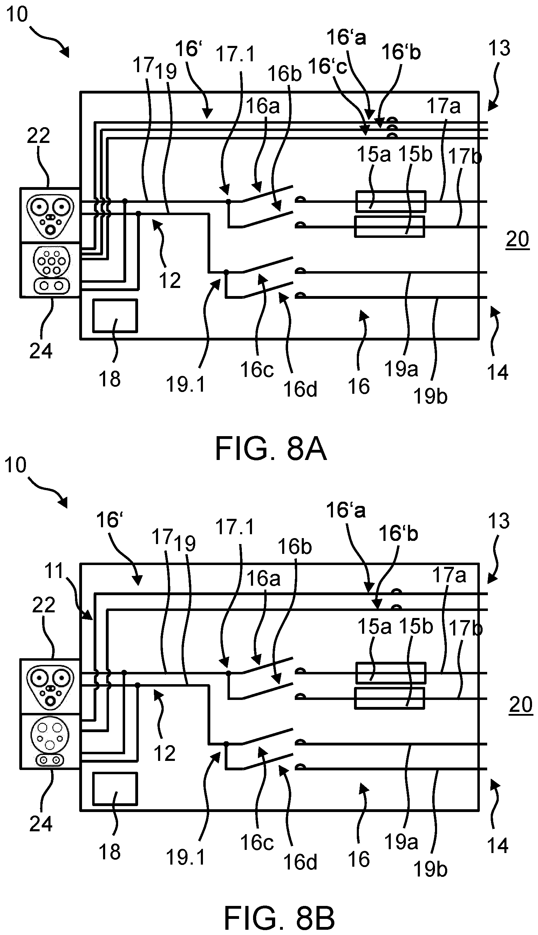

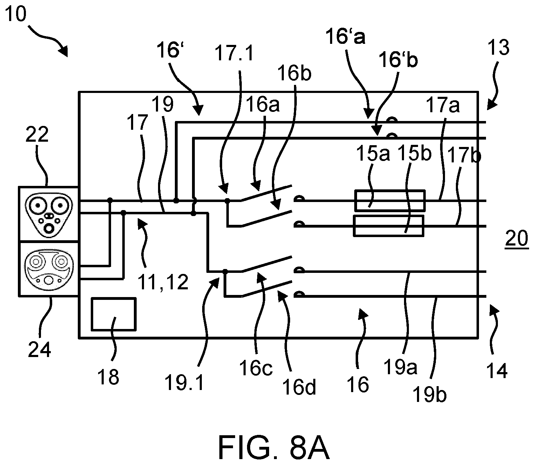

Die Figuren 8A-8C zeigen weitere Ausführungsformen der Ladevorrichtung 10 bzw. des Ladesystems 20. Auch diese basieren grundsätzlich auf der in den Figuren 4A und 4B gezeigten Ausführungsform, wobei die Ladevorrichtungen 10 der Figuren 8A-8C zusätzlich für ein AC-Laden eingerichtet sind.

Entsprechend weisen alle der Ausführungsformen der Figuren 8A-8C zusätzlich einen Wechselspannungseingang 11, einen Wechselspannungsausgang 13 und eine weitere Verbindungseinrichtung 16' auf, über die der Wechselspannungseingang 11 und der Wechselspannungsausgang 13 miteinander elektrisch verbindbar sind.

Bevorzugt ist der Wechselspannungseingang 11 dabei als ein vom Gleichspannungseingang 12 und/oder weiteren Gleichspannungseingang 12' separater bzw. getrennter Eingang ausgeführt (vgl. Figuren 8A und 8B). Beispielsweise kann der Wechselspannungseingang 11 zwei oder drei AC-Eingangskontakte aufweisen. Es ist allerdings auch möglich, dass der Wechselspannungseingang 11 und der Gleichspannungseingang 12 als ein gemeinsamer Eingang ausgebildet sind (vgl. Figur 8C).

Bevorzugt ist auch der Wechselspannungsausgang 13 ein vom Gleichspannungsausgang 14 separater bzw. getrennter Ausgang. Beispielsweise können der Wechselspannungsausgang 13 und der Gleichspannungsausgang 14 an verschiedenen Stellen an der Ladevorrichtung 10 angeordnet sein. Beispielsweise kann der Wechselspannungseingang 11 zwei oder drei AC-Ausgangskontakte aufweisen. Der Wechselspannungsausgang 13 dient bevorzugt zum Verbinden mit einem AC-DC-Wandler (z. B. On-Board-Charger, nicht dargestellt) des Elektrofahrzeugs 30.

Hinsichtlich der konkreten Ausführung der weiteren Verbindungseinrichtung 16' sowie der Anbindung an die erste bzw. zweite Ladeschnittstelle 22, 24 unterscheiden sich die Ausführungsformen der Figuren 8A-8C, sodass im Folgenden auf die jeweiligen kennzeichnenden Merkmale der verschiedenen Ausführungsformen eingegangen wird.

In der Ausführungsform von Figur 8A ist der Gleichspannungseingang 12 sowohl mit der ersten als auch zweiten Ladeschnittstelle 22 und 24 elektrisch verbunden. Bevorzugt ist die erste Ladeschnittstelle 22 dabei eine MCS-Ladeschnittstelle und die zweite Ladeschnittstelle 24 eine CCS2-Ladeschnittstelle. Entsprechend kann der positive DC-Eingangskontakt des Gleichspannungseingangs 12 mit jeweils einem der DC-Stromkontakte der MCS- und CCS2-Ladeschnittstelle verbunden sein, während der negative DC-Eingangskontakt des Gleichspannungseingangs 12 mit jeweils dem anderen DC-Stromkontakte der MCS- und CCS2-Ladeschnittstelle verbunden sein kann.

Der Wechselspannungseingang 11 hingegen ist ausschließlich mit einer der beiden Ladeschnittstelle 22 und 24, nämlich der zweiten Ladeschnittstelle 24, verbunden. Hierbei weist der Wechselspannungseingang 11 bevorzugt drei AC-Eingangskontakte auf, die jeweils mit einem der drei AC-Stromkontakte der CCS2-Ladeschnittstelle verbunden sind.

Die weitere Verbindungseinrichtung 16` weist vorliegend drei voneinander getrennte Leitungsverbindungen auf, über die jeweils einer der AC-Eingangskontakte mit jeweils einem der AC-Ausgangskontakte verbindbar ist. Die drei Leitungsverbindungen können hierbei auch als erste, zweite und dritte Leitungsverbindung bezeichnet werden. Jede der Leitungsverbindungen kann hierbei optional ein Schaltelement aufweisen. Beispielsweise weist vorliegend die erste Leitungsverbindung das Schaltelement 16'a, die zweite Leitungsverbindung das Schaltelement 16'b und die dritte Leitungsverbindung das Schaltelement 16'c auf.

Die weitere Verbindungseinrichtung 16` ist ferner von der Verbindungseinrichtung 16 galvanisch getrennt. Bevorzugt ist die weitere Verbindungseinrichtung 16` somit ausgebildet sein, einen AC-Ladestrom vom Wechselspannungseingang 11 zum Wechselspannungsausgang 13 durchzuschleifen, vorzugsweise ohne, dass dieser in Kontakt mit den DC-Komponenten der Ladevorrichtung 10 tritt.

Um zusätzlich die Sicherheit während eines AC-Ladens zu erhöhen, kann die Steuereinrichtung 18 ferner eingerichtet sein, für ein Laden des elektrischen Energiespeichers mittels eines Wechselstrom-Ladeverfahrens die mehreren Schaltelemente der Verbindungseinrichtung 16 in eine dritte Schaltstellung S₃ zu schalten, in der die jeweiligen Schaltelemente alle geöffnet sind (vgl. Figur 8A). Entsprechend können in der dritten Schaltstellung S₃ das erste und zweite positive Schaltelement 16a und 16b sowie das erste und zweite negative Schaltelement 16c und 16d jeweils geöffnet geschalten sein.

Die in Figur 8B dargestellte Ausführungsform entspricht im Wesentlichen der von Figur 8A, allerdings handelt es sich bei der zweiten Ladeschnittstelle 24 um eine CCS1-Ladeschnittstelle. Entsprechend weist der Wechselspannungseingang 11 hier bevorzugt nur zwei AC-Eingangskontakte auf, die jeweils mit einem der zwei AC-Stromkontakte (Phase- und Neutralpin) der CCS1-Ladeschnittstelle verbunden sind. Weiterhin weist auch die weitere Verbindungseinrichtung 16`vorliegend nur zwei voneinander getrennte Leitungsverbindungen auf, über die jeweils einer der AC-Eingangskontakte mit jeweils einem der AC-Ausgangskontakte verbindbar ist.

In der in Figur 8C dargestellten Ausführungsform ist der gemeinsame Eingang sowohl mit der ersten als auch zweiten Ladeschnittstelle 22 und 24 elektrisch verbunden. Bevorzugt ist die erste Ladeschnittstelle 22 dabei eine MCS-Ladeschnittstelle und die zweite Ladeschnittstelle 24 eine NACS-Ladeschnittstelle. Entsprechend kann ein positiver Eingangskontakt des gemeinsamen Eingangs mit jeweils einem der Stromkontakte der MCS- und NACS-Ladeschnittstelle verbunden sein, während ein negativer Eingangskontakt des gemeinsamen Eingangs mit jeweils dem anderen Stromkontakt der MCS- und NACS- Ladeschnittstelle verbunden sein kann.

Die weitere Verbindungseinrichtung 16` ist vorliegend mit der Verbindungseinrichtung 16 elektrisch verbunden. Beispielsweise kann die weitere Verbindungseinrichtung 16` eine erste Leitungsverbindung aufweisen, über die der Wechselspannungsausgang 13 mit dem positiven Ladestrompfad 17 verbindbar ist. Bevorzugt kann die erste Leitungsverbindung dabei an einer Stelle zwischen dem Gleichspannungseingang 12 und der positiven Verzweigungsstelle 17.1 an den positiven Ladestrompfad 17 elektrisch anbindbar sein. Optional kann die erste Leitungsverbindung wiederum ein Schaltelement, vorliegend das Schaltelement 16'a, aufweisen.

Ferner kann die weitere Verbindungseinrichtung 16` eine zweite Leitungsverbindung aufweisen, über die der Wechselspannungsausgang 13 mit dem negativen Ladestrompfad 19 verbindbar ist. Bevorzugt kann die zweite Leitungsverbindung dabei an einer Stelle zwischen dem Gleichspannungseingang 12 und der negativen Verzweigungsstelle 19.1 an den negativen Ladestrompfad 19 elektrisch anbindbar sein. Optional kann die zweite Leitungsverbindung wiederum ein Schaltelement, vorliegend das Schaltelement 16'b, aufweisen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10: Ladevorrichtung
- 11: Wechselspannungseingang
- 12: Gleichspannungseingang
- 12': Weiteren Gleichspannungseingang
- 13: Wechselspannungsausgang
- 14: Gleichspannungsausgang
- 15a: Sicherung
- 15b: Weitere Sicherung
- 16: Verbindungseinrichtung
- 16a: Erstes positives Schaltelement
- 16b: Zweites positives Schaltelement
- 16c: Erstes negatives Schaltelement
- 16d: Zweites negatives Schaltelement
- 16e: Positives Haupt-Schaltelement
- 16f: Negatives Haupt-Schaltelement
- 16g: Weiteres positives Schaltelement
- 16h: Weiteres negatives Schaltelement
- 16': Weitere Verbindungseinrichtung
- 17: Positiver Ladestrompfad
- 17.1: Positive Verzweigungsstelle
- 17a: Erster positiven Ladestromteilpfad
- 17b: Zweiter positiver Ladestromteilpfad
- 17`: Weiterer positiver Ladestrompfad
- 18: Steuereinrichtung
- 19: Negativer Ladestrompfad
- 19.1: Negative Verzweigungsstelle
- 19a: Erster negativer Ladestromteilpfad
- 19b: Zweiter negativer Ladestromteilpfad
- 19`: Weiterer negativer Ladestrompfad
- 22: Erste Ladeschnittstelle
- 22a: Erste Ladeklappe
- 24: Zweite Ladeschnittstelle
- 24a: Zweite Ladeklappe
- 30: Elektrofahrzeug
- 32: Elektrischer Energiespeicher
- 40: Ladestation

## Patentansprüche

1. Ladevorrichtung (10) für ein Elektrofahrzeug (30), vorzugsweise Elektro-Nutzfahrzeug, wobei die Ladevorrichtung (10) aufweist:
einen Gleichspannungseingang (12) zum elektrischen Verbinden mit mindestens einer Ladeschnittstelle (22, 24), vorzugsweise Ladebuchse, des Elektrofahrzeugs (30), wobei die mindestens eine Ladeschnittstelle (22, 24) zum Empfangen von elektrischer Energie von einer fahrzeugexternen Ladestation (40) eingerichtet ist;
einen Gleichspannungsausgang (14) zum Verbinden mit einem elektrischen Energiespeicher (32) des Elektrofahrzeugs (30);
eine schaltbare Verbindungseinrichtung (16), über die der Gleichspannungseingang (12) und der Gleichspannungsausgang (14) miteinander elektrisch verbindbar sind und die mehrere Schaltelemente (16a, 16b, 16c, 16d, 16e, 16f, 16g, 16h), vorzugsweise Schaltschütze, aufweist; und
eine Steuereinrichtung (18) zum Betreiben der mehreren Schaltelemente (16a, 16b, 16c, 16d, 16e, 16f),
**dadurch gekennzeichnet, dass** die Steuereinrichtung (18) eingerichtet ist, für ein Laden des elektrischen Energiespeichers (32) mittels eines ersten Ladeverfahrens, vorzugsweise eines Megawatt-Charging-System-Ladeverfahrens (MCS-Ladeverfahrens), die mehreren Schaltelemente (16a, 16b, 16c, 16d, 16e, 16f, 16g, 16h) in einer ersten Schaltstellung (S₁) zu betreiben und für ein Laden des elektrischen Energiespeichers (32) mittels eines zweiten Ladeverfahrens, vorzugsweise eines Combined-Charging-System-Ladeverfahrens (CCS-Ladeverfahrens), die mehreren Schaltelemente (116a, 16b, 16c, 16d, 16e, 16f, 16g, 16h) in einer zweiten Schaltstellung (S₂) zu betreiben.

2. Ladevorrichtung (10) nach Anspruch 1, wobei:
die mindestens einer Ladeschnittstelle (22, 24) des Elektrofahrzeugs (30) eine Combined-Charging-System-Ladeschnittstelle (CCS-Ladeschnittstelle) und/oder eine Megawatt-Charging-System-Ladeschnittstelle (MCS-Ladeschnittstelle) aufweist.

3. Ladevorrichtung (10) nach einem der vorherigen Ansprüche, wobei:
die Ladevorrichtung (10) in der ersten Schaltstellung (S₁) eine erste Kurzschlussgrenze aufweist und in der zweiten Schaltstellung (S₂) eine, von der erste Kurzschlussgrenze unterschiedliche, zweite Kurzschlussgrenze aufweist; und/oder
die Ladevorrichtung (10) in der ersten Schaltstellung (S₁) für eine erste maximale Ladespannung, vorzugsweise von bis zu 1000 Volt, eingerichtet ist und in der zweiten Schaltstellung (S₂) für eine, von der ersten maximalen Ladespannung unterschiedlichen, zweiten maximalen Ladespannung, vorzugsweise von über 1000 Volt, eingerichtet ist; und/oder
die Ladevorrichtung (10) in der ersten Schaltstellung (S₁) für einen ersten maximalen Ladestrom, vorzugsweise von unter 1000 Ampere, eingerichtet ist und in der zweiten Schaltstellung (S₂) für einen, von dem ersten maximalen Ladestrom unterschiedlichen, zweiten maximalen Ladestrom, vorzugsweise von über 1000 Ampere, eingerichtet ist.

4. Ladevorrichtung (10) nach einem der vorherigen Ansprüche, wobei:
die Verbindungseinrichtung (16) einen positiven Ladestrompfad (17) aufweist, der sich ausgehend vom Gleichspannungseingang (12) an einer positiven Verzweigungsstelle (17.1) in einen ersten positiven Ladestromteilpfad (17a) und einen zweiten positiven Ladestromteilpfad (17b) verzweigt.

5. Ladevorrichtung (10) nach Anspruch 4, wobei:
die mehreren Schaltelemente (16a, 16b, 16c, 16d, 16e, 16f, 16g, 16h) ein erstes positives Schaltelement (16a) aufweisen, das im ersten positiven Ladestromteilpfad (17a) angeordnet ist, und ein zweites positives Schaltelement (16b) aufweisen, das im zweiten positiven Ladestromteilpfad (17b) angeordnet ist; und:
a) in der ersten Schaltstellung (S₁):
das erste und zweite positive Schaltelement (16a, 16b) gleich, vorzugsweise geschlossen, geschaltet sind; und/oder
b) in der zweiten Schaltstellung (S₂):
das erste und zweite positive Schaltelement (16a, 16b) unterschiedlich geschaltet sind, vorzugsweise derart,
dass das erste positive Schaltelement (16a) geschlossen ist und das zweite positive Schaltelement (16b) geöffnet ist oder das erste positive Schaltelement (16a) geöffnet ist und das zweite positive Schaltelement (16b) geschlossen ist.

6. Ladevorrichtung (10) nach einem der vorherigen Ansprüche, wobei:
die Verbindungseinrichtung (16) einen negativen Ladestrompfad (19) aufweist, der sich ausgehend vom Gleichspannungseingang (12) an einer negativen Verzweigungsstelle (19.1) in einen ersten negativen Ladestromteilpfad (19a) und einen zweiten negativen Ladestromteilpfad (19b) verzweigt.

7. Ladevorrichtung (10) nach Anspruch 6, wobei:
die mehreren Schaltelemente (16a, 16b, 16c, 16d, 16e, 16f, 16g, 16h) ein erstes negatives Schaltelement (16c) aufweisen, das im ersten negativen Ladestromteilpfad (19a) angeordnet ist, und ein zweites negatives Schaltelement (16d) aufweisen, das im zweiten negativen Ladestromteilpfad (19b) angeordnet ist; und:
a) in der ersten Schaltstellung (S₁):
das erste und zweite negative Schaltelement (16c, 16d) gleich, vorzugsweise geschlossen, geschaltet sind; und/oder
b) in der zweiten Schaltstellung (S₂):
das erste und zweite negative Schaltelement (16c, 16d) unterschiedlich geschaltet sind, vorzugsweise derart,
dass das erste negative Schaltelement (16c) geschlossen ist und das zweite negative Schaltelement (16d) geöffnet ist oder das erste negative Schaltelement (16c) geöffnet ist und das zweite negative Schaltelement (16d) geschlossen ist.

8. Ladevorrichtung (10) nach einem der Ansprüche 4 bis 7, wobei:
die Verbindungseinrichtung (16) ferner zumindest zwei Sicherungen (15a, 15b), vorzugsweise Schmelzsicherungen, aufweist, wobei eine Sicherung (15a) der zumindest zwei Sicherungen (15a, 15b) im ersten positive Ladestromteilpfad (17a) und eine weitere Sicherung (15b) der zumindest zwei Sicherungen (15a, 15b) im zweiten positiven Ladestromteilpfad (17b) angeordnet ist; und/oder
die mehreren Schaltelemente (16a, 16b, 16c, 16d, 16e, 16f, 16g, 16h) der Verbindungseinrichtung (16) ein positives Haupt-Schaltelement (16e), vorzugsweise positives Hauptschaltschütz, umfassen, das im positiven Ladestrompfad (17) zwischen dem Gleichspannungseingang (12) und der positiven Verzweigungsstelle (17.1) angeordnet ist; und/oder
die mehreren Schaltelemente (16a, 16b, 16c, 16d, 16e, 16f, 16g, 16h) der Verbindungseinrichtung (16) ein negatives Haupt-Schaltelement (16f), vorzugsweise negatives Hauptschaltschütz, umfassen, das im negativen Ladestrompfad (19) zwischen dem Gleichspannungseingang (12) und der negativen Verzweigungsstelle (19.1) angeordnet ist.

9. Ladevorrichtung (10) nach einem der vorherigen Ansprüche, ferner aufweisend:
einen Wechselspannungseingang (11) zum elektrischen Verbinden mit der mindestens einen Ladeschnittstelle (22, 24) des Elektrofahrzeugs (30);
einen Wechselspannungsausgang (13) zum Verbinden mit einem AC-DC-Wandler des Elektrofahrzeugs (30);
eine, vorzugsweise schaltbare, weitere Verbindungseinrichtung (16'), über die der Wechselspannungseingang (11) und der Wechselspannungsausgang (13) miteinander elektrisch verbindbar sind.

10. Ladevorrichtung (10) nach Anspruch 8, wobei:
die Steuereinrichtung (18) eingerichtet ist, für ein Laden des elektrischen Energiespeichers (32) mittels eines Wechselstrom-Ladeverfahrens die mehreren Schaltelemente (16a, 16b, 16c, 16d, 16e, 16f, 16g, 16h) der Verbindungseinrichtung (16) in eine dritte Schaltstellung (S₃) zu schalten, in der alle Schaltelemente (16a, 16b, 16c, 16d, 16e, 16f, 16g, 16h) geöffnet sind; und/oder
die weitere Verbindungseinrichtung (16') und die Verbindungseinrichtung (16) voneinander elektrisch getrennt sind; oder
die weitere Verbindungseinrichtung (16') und die Verbindungseinrichtung (16) miteinander elektrisch verbunden sind, vorzugsweise derart, dass der Wechselspannungseingang (11) und der Gleichspannungseingang (12) als ein gemeinsamer Eingang ausgebildet sind.

11. Ladevorrichtung (10) nach einem der vorherigen Ansprüche, ferner aufweisend:
einen weiteren Gleichspannungseingang (12') zum elektrischen Verbinden mit der mindestens einen Ladeschnittstelle (22, 24) des Elektrofahrzeugs (30);
wobei der weitere Gleichspannungseingang (12') separat vom Gleichspannungseingang (12) ausgebildet ist; und
wobei die Verbindungseinrichtung (16) auch den weiteren Gleichspannungseingang (12') und den Gleichspannungsausgang (14) miteinander elektrisch verbindet.

12. Ladevorrichtung (10) nach Anspruch 11, wobei:
in der ersten Schaltstellung (S₁), vorzugsweise ausschließlich, der Gleichspannungseingang (12) und der Gleichspannungsausgang (14) miteinander elektrisch verbunden sind.
in der zweiten Schaltstellung (S₂), vorzugsweise ausschließlich, der weitere Gleichspannungseingang (12') und der Gleichspannungsausgang (14) miteinander elektrisch verbunden sind.

13. Verfahren zur Herstellung eines Ladesystems (20) für ein Elektrofahrzeug (30), vorzugsweise Elektro-Nutzfahrzeug, wobei das Verfahren aufweist:
Bereitstellen einer Ladevorrichtung (10) nach einem der vorherigen Ansprüche;
Bereitstellen mindestens einer Ladeschnittstelle (22, 24), vorzugsweise von mindestens zwei Ladeschnittstellen (22, 24), zum Empfangen von elektrischer Energie von einer fahrzeugexternen Ladestation (40); und
Elektrisches Verbinden der mindestens einen Ladeschnittstelle (22, 24), vorzugsweise der mindestens zwei Ladeschnittstellen (22, 24), mit einem Gleichspannungseingang (12) der Ladevorrichtung (10).

14. Ladesystem (20) für ein Elektrofahrzeug (30), vorzugsweise hergestellt mittels des Verfahrens nach Anspruch 13, wobei das Ladesystem (20) aufweist:
eine Ladevorrichtung (10) nach einem der Ansprüche 1 bis 12; und
mindestens eine Ladeschnittstelle (22, 24), die mit einem Gleichspannungseingang (12) der Ladevorrichtung (10) elektrisch verbunden ist.

15. Ladesystem (20) nach Anspruch 14, wobei:
die mindestens eine Ladeschnittstelle (22, 24) eine erste Ladeschnittstelle (22), vorzugsweise eine MCS-Ladeschnittstelle, und eine zweite Ladeschnittstelle (24), vorzugsweise eine CCS-Ladeschnittstelle, aufweist.

16. Ladesystem (20) nach Anspruch 15, wobei:
die erste und zweite Ladeschnittstelle (22, 24) fest mit der Ladevorrichtung (10) verbunden sind, vorzugsweise in die Ladevorrichtung (10) integriert sind; und/oder
die Ladevorrichtung (10) und die erste und zweite Ladeschnittstelle (22, 24) von einem gemeinsamen Gehäuse umhaust sind und/oder eine gemeinsame Baugruppe bilden und/oder
die erste und zweite Ladeschnittstelle (22, 24) nebeneinander und/oder aneinander angrenzend angeordnet sind; und/oder
der Gleichspannungseingang (12) als ein interner Gleichspannungseingang (12) ausgebildet ist, der vorzugsweise von außen nicht unmittelbar zugänglich ist.

17. Ladesystem (20) nach Anspruch 15 oder 16, ferner aufweisend:
eine erste Ladeklappe (22a), die zwischen einer Schließstellung, in welcher die erste Ladeklappe (22a) die erste Ladeschnittstelle (22) verschließt, und einer Offenstellung, in welcher die erste Ladeklappe (22a) die erste Ladeschnittstelle (22) freigibt, bewegbar ist;
eine zweite Ladeklappe (24a), die zwischen einer Schließstellung, in welcher die zweite Ladeklappe (24a) die zweite Ladeschnittstelle (24) verschließt, und einer Offenstellung, in welcher die zweite Ladeklappe (24a) die zweite Ladeschnittstelle (24) freigibt, bewegbar ist; und
eine Verriegelungseinrichtung, die ausgebildet ist, die zweite Ladeklappe (24a) zu verriegeln, falls die erste Ladeklappe (22a) in der Offenstellung ist, und die erste Ladeklappe (22a) zu verriegeln, falls die zweite Ladeklappe (24a) in der Offenstellung ist.

18. Ladesystem (20) nach einem der Ansprüche 15 bis 17, wobei:
die Steuereinrichtung (18) eingerichtet ist, die mehreren Schaltelemente in Abhängigkeit davon, ob die erste oder zweite Ladeschnittstelle (22, 24) mit der fahrzeugexternen Ladestation (40) verbunden ist, in die erste Schaltstellung (S₁) oder zweite Schaltstellung (S₂) zu schalten.

19. Kraftfahrzeug, vorzugsweise Hybrid- oder Elektrofahrzeug (30), besonders bevorzugt Hybrid-Nutzfahrzeug oder Elektro-Nutzfahrzeug, aufweisend:
eine Ladevorrichtung (10) nach einem der Ansprüche 1-12; und/oder
ein Ladesystem (20) nach einem der Ansprüche 14-18.
